# FASCICULE DE BREVET EUROPEEN

(11) **EP 2 887 014 B1**
(45) Date de publication et mention de la délivrance du brevet: **05.02.2020**
(21) Numéro de dépôt: 13198518.6
(22) Date de dépôt: 19.12.2013
(51) Int. Cl.: G01C 19/5776

(54) **Circuit électronique de mesure de la vitesse de rotation dans un gyroscope du type MEMS et procédé pour sa mise en action**
Elektronischer Schaltkreis zur Drehgeschwindigkeitsmessung in einem MEMS Kreisel und Verfahren zu seiner Ausführung
Electronic circuit for measuring the speed of rotation in a MEMS gyroscope and method for operating the same

(43) Date de publication de la demande: 24.06.2015
(73) Titulaire: EM Microelectronic-Marin SA, 2074 Marin (CH)
(72) Inventeur: Entringer, Christophe, 1426 Corcelles-près-Concise (CH); Deschildre, Alexandre, 2074 Marin (CH); Grosjean, Sylvain, 25500 Les Fins (FR)
(74) Mandataire: Giraud, Eric

(56) Documents cités:
- EP-A1- 2 211 143
- US-A1- 2013 055 815
- US-B1- 6 564 637

## Description

### DOMAINE TECHNIQUE

La présente invention concerne un circuit électronique de mesure de la vitesse de rotation ou vitesse angulaire dans un gyroscope du type MEMS à haut facteur de qualité.

La présente invention concerne également le procédé de mise en action du circuit électronique de mesure de la vitesse de rotation.

### ARRIERE-PLAN TECHNOLOGIQUE

De manière conventionnelle, un circuit électronique relié à au moins un résonateur d'un dispositif à résonateur du type MEMS peut également être utilisé pour effectuer une mesure d'une vitesse angulaire. Il peut être prévu de mesurer une vitesse angulaire selon un, deux ou trois axes par exemple avec un gyroscope du type MEMS. Le gyroscope comprend généralement au moins une masse maintenue par une structure sous forme de ressort et susceptible d'être mise en oscillation électriquement à une fréquence déterminée par la constante du ressort avec un facteur d'amortissement défini de la masse. Une vitesse angulaire peut être déterminée sur la base d'une vitesse d'oscillation de la masse et de la force générée, qui est perpendiculaire à la vitesse angulaire et au déplacement en oscillation de la masse.

Pour ce faire, il existe des circuits électroniques, qui permettent d'entraîner en oscillation la masse à une fréquence déterminée et à une amplitude définie, et pour mesurer une vitesse angulaire selon une direction perpendiculaire à l'oscillation de la masse. Ces circuits électroniques d'entraînement utilisent préférentiellement une oscillation dans une boucle à verrouillage de phase pour l'entraînement de l'oscillation selon au moins un axe de déplacement du résonateur du type MEMS comme décrit notamment dans les demandes de brevet EP 2 259 019 A1 et EP 2 336 717 A1. Une boucle à verrouillage de phase est utilisée pour l'entretien de l'oscillation de la masse du résonateur dans une première direction. Lors d'une vitesse de rotation à mesurer par un circuit de mesure, une oscillation dans une seconde direction perpendiculaire à la première direction est également générée avec un déphasage de π/2 par rapport à l'oscillation selon la première direction. Pour l'entretien de l'oscillation de la masse et la mesure de la vitesse de rotation, aucune réduction de consommation ne peut être obtenue, car également une tension d'alimentation relativement élevée est nécessaire. Le temps de démarrage d'un tel système de mesure de la vitesse de rotation est ainsi lent, ce qui constitue aussi un inconvénient.

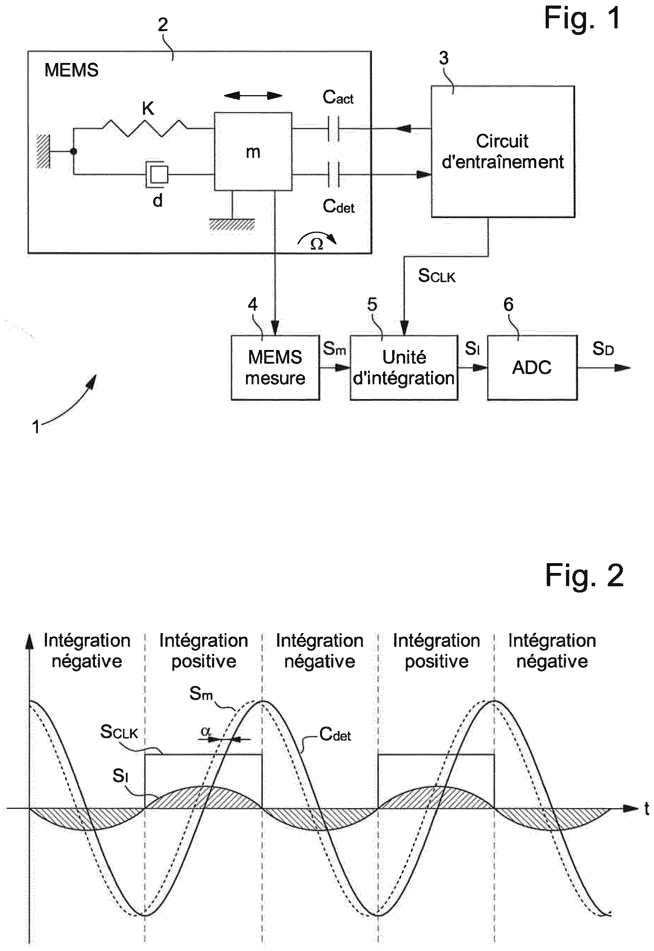

On peut citer aussi le circuit électronique d'entraînement et de mesure de la vitesse angulaire d'au moins un résonateur MEMS d'un gyroscope selon un, deux ou trois axes, qui est décrit dans la thèse intitulée "System and circuit design for a capacitive MEMS gyroscope" rédigée par Mikko Saukoski de l'université d'Helsinki dans la faculté d'électronique, communication et automatisation, dans le département des micro- et nanosciences en 2008 (ISBN9789512292974). Comme précédemment, il est utilisé une boucle à verrouillage de phase pour le maintien de l'oscillation de la masse du gyroscope du résonateur primaire, comme représenté à la figure 2.9 de la page 31. La mesure de la vitesse de rotation est déterminée par le résonateur secondaire du gyroscope dans une direction perpendiculaire au mouvement de la masse oscillante. Ceci ne permet pas de réduire la consommation électrique du système, ce qui est un inconvénient. Plusieurs perturbations sont également constatées entre l'activation d'oscillation de la masse et la détection du mouvement de la masse pour réguler l'amplitude d'oscillation sans faciliter également la mesure de la vitesse angulaire, ce qui constitue un autre inconvénient.

On peut encore citer le document intitulé "Force to rebalance control of HRG and suppression of its errors on the basis of FPGA" de Xu Wang, Wenqi Wu, Bing Luo, Zhen Fang, Yun Li et Qingan Jiang, publié le 16 décembre 2011 dans Sensors 2011 (ISSN 1424-8220). Ce document décrit un nouveau concept d'adaptation de force pour un résonateur gyroscopique hémisphérique sur la base d'un FPGA. Le système décrit prévoit une oscillation forcée de la masse par un oscillateur du type VCO sur la base de signaux cos(ω·t) et sin(ω·t). Le système détecte le mouvement du résonateur secondaire, qui est défini comme l'électrode sud pour alimenter le résonateur primaire, qui est défini comme l'électrode ouest. Ainsi cela permet d'annuler la vibration sur le primaire. Dans cette boucle d'asservissement, la phase et l'amplitude sont asservies pour fournir exactement l'énergie nécessaire pour annuler le mouvement du secondaire.

Un inconvénient de ce système est qu'il est utilisé un oscillateur du type VCO. Cela ne permet pas de réduire la consommation électrique générale du système pour l'asservissement de la phase et de l'amplitude d'oscillation et aussi pour la mesure de la vitesse angulaire. De plus, il est utilisé l'information, qui provient du secondaire pour faire osciller le résonateur primaire. Cela complique la réalisation, ainsi que la précision d'asservissement de la phase et de l'amplitude d'oscillation. Le primaire est dépendant du secondaire, ce qui constitue un autre inconvénient.

Le brevet US 6,564,637 B1 décrit un capteur d'accélération ou de vitesse angulaire. Un premier élément piézorésistif détecte une vibration de torsion dans une première direction. Un second élément piézorésistif fournit un signal de mesure déphasé de 90° du signal du premier élément piézorésistif. Un multiplieur multiplie le signal du premier élément piézorésistif déphasé par un déphaseur de 90° avec le signal du second élément piézorésistif pour déterminer une vitesse de rotation. La structure comprend un nombre considérable de composants dans la boucle d'asservissement, ainsi que pour la mesure de la vitesse de rotation, ce qui ne permet pas de minimiser la consommation électrique. Cela constitue un inconvénient.

Les demandes de brevet US 2013/0055815 A1 et EP 2 211 143 A1 décrivent chacune un gyromètre pour la mesure d'une vitesse angulaire, mais sans mentionner de moyens de mesure de la vitesse angulaire dépendante d'un signal de cadencement d'une boucle d'asservissement d'entretien de l'oscillation d'une masse d'un résonateur. Aucune réduction de consommation ne peut être constatée pour une telle mesure de la vitesse angulaire, ce qui constitue un inconvénient.

### RESUME DE L'INVENTION

L'invention a donc pour but de pallier aux inconvénients de l'état de la technique susmentionné en fournissant un circuit électronique de mesure de la vitesse de rotation dans un gyroscope du type MEMS, peu complexe et qui permet de minimiser la consommation électrique en déterminant la vitesse angulaire facilement en retirant l'influence du signal d'entretien d'oscillation de la masse.

A cet effet, l'invention concerne un circuit électronique de mesure de la vitesse de rotation dans un gyroscope du type MEMS, qui comprend les caractéristiques définies dans les revendications indépendantes 1 et 2.

Des formes particulières d'exécution du circuit électronique de mesure de la vitesse de rotation dans un gyroscope du type MEMS sont définies dans les revendications dépendantes 3 à 14.

Un avantage du circuit électronique de mesure de la vitesse de rotation réside dans le fait que suite à une intégration d'un signal de mesure dépendant de l'oscillation de la masse oscillante, il est possible de démoduler facilement le signal de vitesse angulaire. La démodulation dans une unité d'intégration est effectuée de manière synchrone sur la base d'un signal de cadencement à fréquence équivalente à la fréquence d'oscillation de la masse en mouvement, donc d'un signal porteur détecté dans un circuit d'entraînement. Cependant ce signal de cadencement fourni par le circuit d'entraînement, est déphasé de π/2 dans la boucle d'asservissement du circuit d'entraînement de la masse du résonateur par rapport au signal porteur. Ceci permet avantageusement de démoduler ledit signal de vitesse angulaire du signal de mesure.

Avantageusement, aucune boucle à verrouillage de phase n'est utilisée pour l'entraînement en oscillation de la masse et pour la mesure de la vitesse de rotation. Cela permet d'effectuer une mesure de la vitesse de rotation sur la base de l'entretien d'oscillation de la masse du résonateur à faible puissance avec également un haut facteur de qualité du résonateur MEMS.

Avantageusement, uniquement un signal, qui comprend des données de la vitesse angulaire, peut être converti ou échantillonné par un convertisseur analogique-numérique peu complexe. Le circuit électronique de mesure de la vitesse angulaire peut être implémenté dans le gyroscope de manière simple par rapport au circuit de l'état de la technique.

Avantageusement, au moins deux phases d'intégration successives peuvent être prévues dans l'unité d'intégration dans deux demi-périodes successives du signal de cadencement. Dans chaque demi-période d'intégration, le signal de vitesse angulaire est démodulé du signal de mesure. Au terme des deux demi-périodes du signal de cadencement, le signal d'intégration comprend l'addition des deux aires d'intégration du signal de vitesse angulaire.

A cet effet, l'invention concerne également un procédé de mise en action d'un circuit électronique de mesure de la vitesse de rotation dans un gyroscope à résonateur du type MEMS, qui comprend les caractéristiques définies dans la revendication indépendante 15.

Des étapes particulières du procédé sont définies dans les revendications dépendantes 16 à 20.

### BREVE DESCRIPTION DES FIGURES

Les buts, avantages et caractéristiques du circuit électronique de mesure de la vitesse de rotation dans un gyroscope du type MEMS, et du procédé de mise en action du circuit électronique, apparaîtront mieux dans la description suivante sur la base de formes d'exécution non limitatives illustrées par les dessins sur lesquels :
- la figure 1 représente de manière simplifiée les composants du circuit électronique de la mesure de la vitesse de rotation dans un gyroscope à résonateur du type MEMS selon l'invention,
- la figure 2 représente un graphe de signaux relatifs à la mesure de la vitesse de rotation et à l'intégration du signal de mesure pour en déterminer la vitesse de rotation selon l'invention,
- la figure 3 représente une première forme d'exécution des composants du circuit électronique pour la mesure de la vitesse de rotation selon l'invention,
- la figure 4 représente des graphes de différents signaux dans la partie du circuit électronique pour la mesure de la vitesse de rotation de la première forme d'exécution de la figure 3 selon l'invention,
- la figure 5 représente une seconde forme d'exécution des composants du circuit électronique pour la mesure de la vitesse de rotation selon l'invention,
- la figure 6 représente de manière simplifiée les composants électroniques du circuit d'entraînement relié à la masse du résonateur du type MEMS selon l'invention,
- la figure 7 représente une forme d'exécution d'un convertisseur courant-tension du circuit d'entraînement pour la détection du mouvement de la masse du résonateur selon l'invention, et
- la figure 8 représente une forme d'exécution d'une unité de décision du circuit d'entraînement pour la fourniture d'un signal d'activation à un élément d'activation de la masse du résonateur selon l'invention.

### DESCRIPTION DETAILLEE DE L'INVENTION

Dans la description suivante, tous les composants électroniques du circuit électronique directement relié au résonateur du gyroscope, qui sont bien connus de l'homme du métier dans ce domaine technique ne seront relatés que de manière simplifiée. Préférentiellement le gyroscope est un gyroscope à capteur ou résonateur du type MEMS à haut facteur de qualité. Les fonctions de base du circuit électronique sont de mesurer la vitesse de rotation sur la base de l'entretien en oscillation de la masse du résonateur primaire. Cette masse oscille dans une direction déterminée avec une amplitude adaptée de l'oscillation mécanique de la masse.

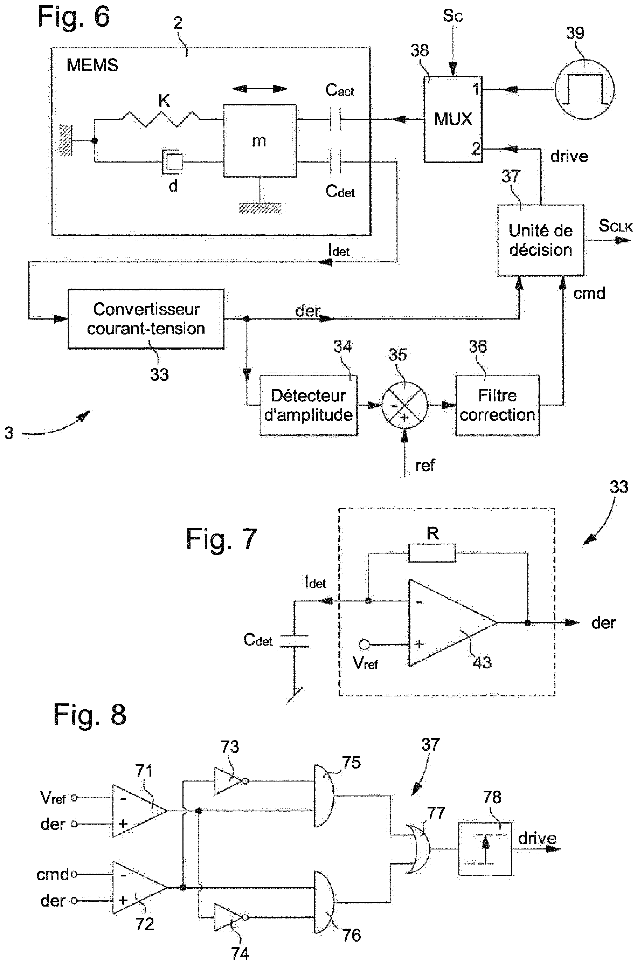

La figure 1 représente une forme d'exécution du circuit électronique de mesure de la vitesse de rotation ou vitesse angulaire dans un gyroscope à résonateur du type MEMS. Le circuit électronique comprend un circuit d'entraînement 3 relié au résonateur 2 du type MEMS. Ce circuit d'entraînement 3 permet d'une part d'activer le résonateur 2 par l'intermédiaire d'un élément d'activation C_{act} et d'autre part de détecter le mouvement d'une masse m du résonateur 2 par l'intermédiaire d'un élément de détection C_{det}. Les éléments d'activation C_{act} et de détection C_{det} peuvent être considérés généralement comme faisant partie des composants du résonateur 2, mais ils peuvent aussi être considérés comme faisant partie du circuit d'entraînement 3 du résonateur 2. En fonction de la mesure ou détection du mouvement de la masse m, une adaptation d'amplitude d'oscillation de la masse est effectuée dans une boucle d'asservissement du circuit d'entraînement 3 comme expliqué ci-après en référence à la figure 6.

Il est à noter que l'élément d'activation est de préférence un condensateur d'activation C_{act} et que l'élément de détection est de préférence un condensateur de détection C_{det}. La valeur capacitive des condensateurs d'activation C_{act} et de détection C_{det} varie proportionnellement par rapport à l'oscillation de la masse en mouvement m. Ces deux condensateurs peuvent être montés en parallèle et avoir une même valeur capacitive. Cependant il peut aussi être envisagé de concevoir le condensateur d'activation plus grand ou plus petit que le condensateur de détection.

Le gyroscope du type MEMS est donc composé en plus du circuit d'entraînement 3 décrit en détail ci-après, d'un résonateur 2, qui est défini comme un résonateur primaire, et d'un résonateur secondaire pour la mesure d'une vitesse de rotation Ω du gyroscope selon une direction ou selon un axe déterminé. Ce résonateur secondaire peut être un élément MEMS de mesure 4, qui est relié à la masse m en mouvement. Ce résonateur secondaire peut être composé d'au moins une résistance, dont la valeur résistive varie en fonction du mouvement oscillant de la masse m. Cette résistance peut être considérée comme une jauge de contrainte. La fréquence de variation de la valeur résistive de la résistance est similaire à la fréquence de variation de la valeur capacitive du condensateur de détection C_{det}.

La résistance est polarisée par une source de courant ou une source de tension pour fournir à une de ses extrémités un signal de mesure Sₘ. Ce signal de mesure Sₘ dépend d'un signal défini comme signal porteur de l'oscillation de la masse m détecté par le condensateur de détection C_{det}, et d'un signal relatif à la vitesse angulaire Ω à mesurer. Le signal porteur est déphasé de π/2 du signal de la vitesse angulaire. Le signal de mesure Sₘ est fourni à une unité d'intégration 5, qui est commandée par un signal de cadencement S_{CLK} provenant directement du circuit d'entraînement. Un signal d'intégration S_{I} à la sortie de l'unité d'intégration 5, peut être converti numériquement par un convertisseur analogique-numérique 6, afin de fournir un signal numérique de données S_{D} pour une unité de traitement non représentée. Ce signal de données représente l'information de la vitesse de rotation, qui a été démodulée du signal de mesure Sₘ par l'unité d'intégration 5.

Le signal de cadencement S_{CLK} est fourni du circuit d'entraînement 3 depuis une boucle d'asservissement de l'amplitude d'oscillation de la masse m. Le signal de cadencement S_{CLK} a une fréquence équivalente à la fréquence du signal porteur, mais déphasé de π/2 comme expliqué ci-après. Le signal porteur est par contre en phase avec un courant de détection I_{det} provenant du condensateur de détection C_{det} du circuit d'entraînement 3. Ce signal de cadencement est composé d'impulsions rectangulaires régulièrement espacées. Cela permet d'opérer une démodulation du signal de la vitesse angulaire contenu dans le signal de mesure Sₘ dans l'unité d'intégration 5 avec une bonne synchronisation.

Il est à noter que le courant de détection I_{det}, provenant du condensateur de détection C_{det}, est proportionnel à la vitesse de la masse sismique. Ce courant de détection est un signal sinusoïdal de fréquence correspondant à la fréquence d'oscillation de la masse mise en mouvement. Ce courant de détection I_{det}, qui provient de l'électrode fixe du condensateur de détection C_{det}, est défini par la formule I = dQ/dt = d(C·V)/dt = C·dV/dt + V·dC/dt = V·dC/dt étant donné que C·dV/dt dans ce cas devient proche de 0. Ainsi V·dC/dt représente un signal de dérivée mathématique der, car la valeur capacitive du condensateur C_{det} varie comme la distance x entre les électrodes avec le mouvement de la masse sismique m. La distance au repos entre les électrodes est x₀ et x = x₀ + Δx avec Δx très petit par rapport à x₀, et cela représente bien l'image de la dérivée donc la vitesse linéaire. Ce signal de dérivée est bien déphasé de π/2 par rapport au signal porteur et peut servir pour générer le signal de cadencement S_{CLK} comme expliqué ci-après. Il peut par exemple être utilisé un comparateur dans la boucle d'asservissement pour comparer directement le signal de dérivée avec une tension de référence pour obtenir le signal de cadencement S_{CLK}.

La figure 2 représente différents signaux pour la mesure de la vitesse de rotation Ω. Le signal porteur C_{det}, provenant de l'oscillation entretenue de la masse m du résonateur primaire, est un signal déphasé de π/2 par rapport au signal du résonateur secondaire de la vitesse angulaire. Le signal porteur C_{det}, qui est normalement le signal du courant de détection I_{det}, est un signal sinusoïdal, alors que le signal de la vitesse angulaire est un signal cosinus, c'est-à-dire un signal sinusoïdal déphasé de π/2. Ce déphasage est relatif à la mesure indirecte de la force de Coriolis suite à la rotation. Le circuit électronique de mesure du résonateur secondaire, qui est relié à la résistance, doit être capable de mesurer l'amplitude, afin de déterminer la vitesse de rotation, qui est proportionnelle à l'amplitude détectée.

Comme montré à la figure 2, le signal de mesure Sₘ, qui est fourni par la résistance, est déphasé d'un angle α par rapport au signal porteur. Ce signal de mesure comprend l'addition du signal porteur et du signal de vitesse angulaire. Grâce à l'utilisation du signal de cadencement S_{CLK}, qui est déphasé de π/2 par rapport au signal porteur C_{det} dans la boucle d'asservissement du circuit d'entraînement, il est possible d'effectuer facilement et de manière synchrone une démodulation dans l'unité d'intégration. L'information relative à la vitesse angulaire peut être directement obtenue par une intégration positive et/ou une intégration négative, afin de fournir un signal d'intégration. Le signal d'intégration S_{I} représente l'aire du signal de la vitesse angulaire pendant l'intégration positive dans une première phase avec le signal de cadencement S_{CLK} dans un premier état, ou pendant l'intégration négative dans une seconde phase avec le signal de cadencement S_{CLK} dans un second état. L'aire pendant l'intégration positive sur la figure 2 est définie positive, alors que l'aire pendant l'intégration négative est définie négative.

Le signal porteur peut être directement retiré dans l'unité d'intégration étant donné que pendant un premier état dans une première demi-période, ou un second état dans une seconde demi-période du signal de cadencement S_{CLK}, l'aire du côté négatif d'intégration du signal porteur est égale à l'aire du côté positif d'intégration du signal porteur. Cela a pour conséquence que l'aire totale relative au signal porteur s'annule pour une intégration positive ou une intégration négative sur la base du cadencement de l'unité d'intégration par le signal de cadencement S_{CLK}. Uniquement l'aire positive et/ou l'aire négative relative au signal de la vitesse angulaire dans le signal d'intégration peuvent être échantillonnées dans un convertisseur analogique-numérique au terme de l'intégration positive ou de l'intégration négative. Il peut être prévu d'inverser l'aire de l'intégration définie négative pour fournir un signal d'intégration S_{I} au terme d'une période complète du signal de cadencement S_{CLK}, qui comprend l'addition des deux aires représentatives de la vitesse angulaire mesurée. Ainsi le signal d'intégration S_{I} avec les deux valeurs des aires d'intégration peut être converti dans le convertisseur analogique-numérique pour un traitement dans une unité de traitement, afin de déterminer la vitesse angulaire.

Selon les signaux représentés à la figure 2, une aire positive durant l'intégration positive est obtenue, lorsque le signal de cadencement S_{CLK} est dans un premier état par exemple à l'état haut, à savoir à l'état "1", alors qu'une aire négative durant l'intégration négative est obtenue, lorsque le signal de cadencement S_{CLK} est dans un second état par exemple à l'état bas, à savoir à l'état "0". Cependant il est également possible d'avoir une intégration positive avec le signal de cadencement à l'état "0", et une intégration négative avec le signal de cadencement à l'état "1".

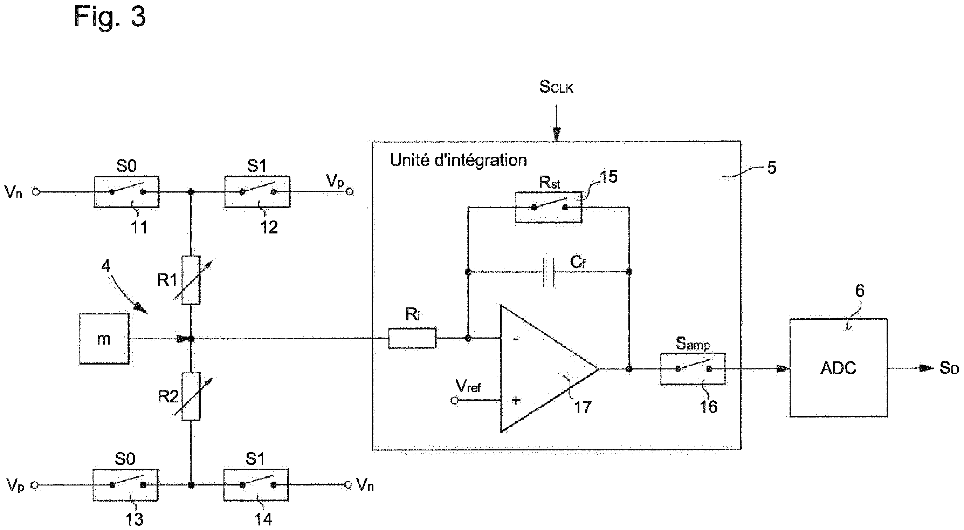

Pour bien comprendre le fonctionnement de la mesure de la vitesse angulaire, la figure 3 représente une première forme d'exécution des composants du circuit électronique pour la mesure de la vitesse de rotation ou angulaire. On remarque dans cette première forme d'exécution, que l'élément MEMS de mesure 4 est composé d'un diviseur résistif R1, R2 ou pont résistif, dont le nœud de connexion est relié mécaniquement à la masse m en étant isolé électriquement de la masse. Une première extrémité libre de la première résistance R1 et une seconde extrémité libre de la seconde résistance R2 sont mécaniquement reliées à une structure fixe du gyroscope. Ainsi l'oscillation de la masse génère une variation de la valeur résistive des deux résistances R1 et R2 du pont résistif. Le signal de variation de la première résistance R1 est déphasé de π par rapport au signal de variation de la seconde résistance R2, c'est-à-dire qu'une résistance est tirée quand l'autre est compressée, et inversement. Les deux résistances R1, R2 peuvent être des jauges de contrainte sous forme de fils métalliques de taille nanométrique. Ces deux résistances peuvent avoir une même valeur résistive au repos.

Le pont résistif R1, R2 est relié à au moins une source de tension non représentée par l'intermédiaire d'un ensemble de commutateurs 11, 12, 13, 14. Cet ensemble de commutateurs peut aussi faire partie de l'unité d'intégration 5. La source de tension fournit une tension haute Vp et une tension basse Vn. La tension haute Vp et la tension basse Vn sont de préférence au-dessus de 0 V avec la tension haute Vp au-dessus d'une tension de référence Vref et la tension basse Vn au-dessous de la tension de référence Vref. La tension haute Vp peut être égale à Vref + β·Vref, alors que la tension basse Vn peut être égale à Vref - β·Vref. La source de tension fournit donc une tension égale à 2·β·Vref de manière que les résistances soient traversées par un faible courant, qui peut être de l'ordre de 100 µA voire inférieur.

La première extrémité libre de la première résistance R1 est reliée à la tension basse Vn par l'intermédiaire d'un premier commutateur 11 commandé par le signal de commande S0. Alternativement, cette première extrémité libre de la première résistance R1 est reliée à la tension haute Vp par l'intermédiaire d'un second commutateur 12 commandé par le signal de commande S1, qui est l'inverse du signal S0 dans les phases d'intégration. La seconde extrémité libre de la seconde résistance R2 est reliée à la tension haute Vp par l'intermédiaire d'un troisième commutateur 13 commandé par le signal S0. Alternativement, la seconde extrémité libre de la seconde résistance R2 est reliée à la tension basse Vn par l'intermédiaire d'un quatrième commutateur 14 commandé par le signal S1.

Pour effectuer une première intégration, par exemple une intégration définie positive, les second et quatrième commutateurs 12, 14 sont commandés par le premier signal de commande S1 pour être fermés, notamment avec le signal S1 à l'état "1". Par contre, les premier et troisième commutateurs 11, 13 sont commandés par le second signal de commande S0 pour être ouverts, notamment avec le signal S0 à l'état "0". Pour effectuer une seconde intégration, par exemple une intégration définie négative, les premier et troisième commutateurs 11, 13 sont commandés par le second signal de commande S0 pour être fermés, notamment avec le signal S0 à l'état "1". Par contre, les second et quatrième commutateurs 12, 14 sont commandés par le premier signal de commande S1 pour être ouverts, notamment avec le signal S1 à l'état "0".

Ces signaux de commandes S1 et S0 sont directement déterminés par le signal de cadencement S_{CLK} fournit à l'unité d'intégration 5 et par l'intermédiaire d'une unité logique non représentée. La durée de fermeture ou d'ouverture des commutateurs 11, 12, 13, 14 correspond à la durée du premier état ou du second état du signal de cadencement S_{CLK}, c'est-à-dire quand le signal de cadencement est dans un état haut ou d'un état bas.

Le signal de mesure Sₘ est fourni depuis le nœud de connexion des résistances R1 et R2. Ce signal de mesure Sₘ est un signal normalement de forme sinusoïdale. Cependant la polarisation des résistances change après chaque phase d'intégration relative à chaque état du signal de cadencement S_{CLK}. De ce fait, la polarité de ce signal de mesure Sₘ change également à chaque demi-période de manière à obtenir après l'intégration, deux phases successives avec deux aires d'intégration de même polarité à additionner.

Le signal de mesure Sₘ est donc fourni à l'unité d'intégration 5, qui comprend tout d'abord une résistance interne de faible valeur Rᵢ. Cette résistance interne est disposée entre le nœud du pont résistif R1, R2 et une première entrée d'un amplificateur 17. Une tension de référence Vref est fournie à une seconde entrée de l'amplificateur 17. De préférence, la première entrée de l'amplificateur est une entrée négative, alors que la seconde entrée de l'amplificateur est une entrée positive. Un condensateur d'intégration C_{f} est disposé entre la première entrée, qui est l'entrée négative de l'amplificateur 17 et la sortie de l'amplificateur. Un cinquième commutateur 15 est connecté en parallèle au condensateur d'intégration C_{f}. Ce cinquième commutateur 15 est un commutateur de décharge commandé par un signal de commande Rst de manière à fermer ledit cinquième commutateur 15 lors d'une remise à zéro du condensateur C_{f} pour une nouvelle intégration.

Quand le cinquième commutateur 15 est ouvert, le condensateur d'intégration intègre le signal de mesure Sₘ, afin de démoduler le signal de vitesse angulaire. Le signal d'intégration S_{I} fourni en sortie de l'amplificateur et relatif à au moins une aire positive ou négative d'une phase d'intégration, contient une information de la vitesse angulaire. Au terme d'au moins une phase d'intégration et de préférence après deux phases d'intégration sur une période complète du signal de cadencement S_{CLK}, un sixième commutateur 16, en tant que commutateur d'échantillonnage, peut être fermé par un signal de commande Samp, qui est un signal de commande d'échantillonnage. Ainsi le signal d'intégration S_{I} est échantillonné dans un convertisseur analogique-numérique 6 de manière à transmettre un signal numérique de données S_{D} à une unité de traitement non représentée. L'échantillonnage du signal d'intégration intervient avant la décharge du condensateur d'intégration.

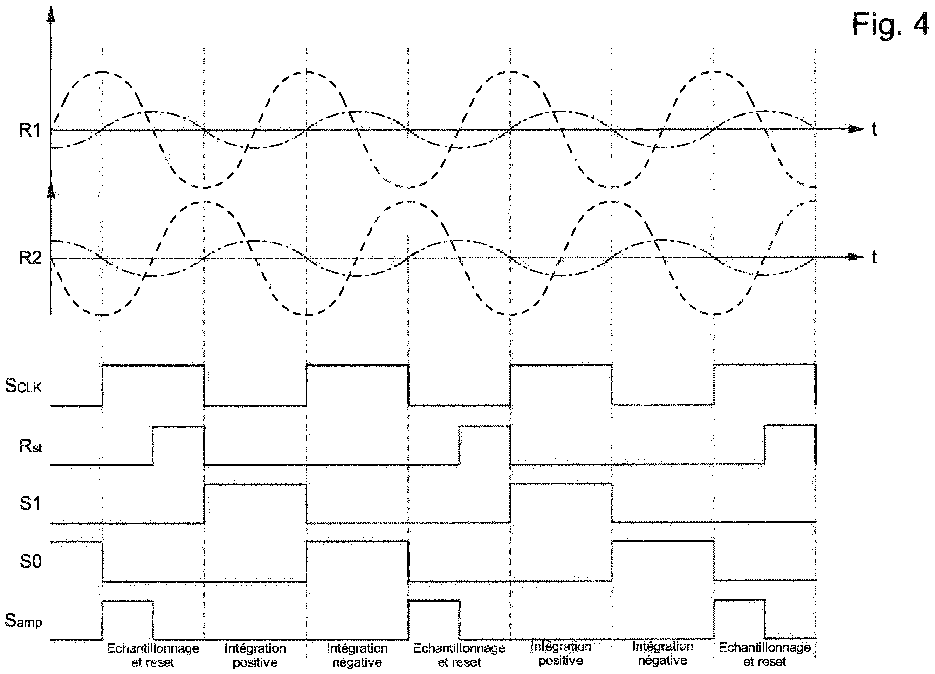

A la figure 4, il est bien représenté des graphes relatifs aux signaux de commande pour le fonctionnement de l'unité d'intégration, afin d'intégrer le signal de mesure notamment avec deux phases d'intégration successives commandées par le signal de cadencement S_{CLK}. Il est montré la variation de la valeur résistive des résistances R1 et R2, qui dépend du signal porteur, c'est-à-dire de l'oscillation de la masse en mouvement. Le signal de variation de la première résistance R1 est un signal sinusoïdal, et le signal de variation de la seconde résistance R2 est également un signal sinusoïdal mais déphasé de π par rapport au signal de variation de la première résistance R1. On remarque sur les mêmes graphes des résistances R1 et R2, le signal de la vitesse angulaire de plus faible amplitude et déphasé de π/2 pour chaque variation de valeur résistive R1 et R2.

Le signal de cadencement S_{CLK} est constitué d'impulsions rectangulaires à une fréquence équivalente à la fréquence de variation résistive et au signal de vitesse angulaire montré sur le premier graphe de la résistance R1. Chaque phase d'intégration est d'une durée correspondant à une demi-période du signal de cadencement. Cependant après une premier phase et une seconde phase successive d'intégration, par exemple après une phase d'intégration positive et une phase d'intégration négative, il doit être opéré un transfert du signal d'intégration S_{I} au convertisseur analogique-numérique. Pour ce faire, le sixième commutateur doit être fermé par le signal de commande Samp à l'état "1" par exemple. Ce signal de commande Samp passe ensuite à l'état "0" par exemple pour ouvrir le sixième commutateur. Après cette opération, une remise à zéro du condensateur d'intégration doit intervenir en commandant la fermeture du cinquième commutateur par le signal de commande Rst à l'état "1" par exemple. De préférence les deux signaux de commande successifs Samp et Rst se succèdent sur une même demi-période du signal de cadencement S_{CLK} à la suite de deux phases d'intégration. La durée à l'état "1" des signaux Samp et Rst peut être définie égale à un quart de la période du signal de cadencement S_{CLK}.

Après l'opération d'échantillonnage et de remise à zéro du condensateur d'intégration, la logique de l'unité d'intégration commande une première phase d'intégration positive en commandant la fermeture des commutateurs 12 et 14 par le signal de commande S1 à l'état "1" par exemple. Le signal de commande S0 des commutateurs 11 et 13 est par contre à l'état "0". A la suite de cette première phase, une seconde phase d'intégration négative est commandée en fermant les commutateurs 11 et 13 par le signal de commande S0 à l'état "1", alors que les commutateurs 12 et 14 sont ouverts par le signal de commande S1 à l'état "0". Les deux phases d'intégration sont cadencées et synchronisées par le signal de cadencement S_{CLK}.

Il est clair qu'il peut être prévu de réaliser plusieurs phases successives d'intégration positive et négative pour autant que le condensateur d'intégration soit à même d'accumuler suffisamment de charges électriques. Généralement il est préféré de n'effectuer qu'une première phase d'intégration positive suivie par une seconde phase d'intégration négative. Il peut aussi être envisagé d'effectuer tout d'abord une première phase d'intégration négative avant d'effectuer une seconde phase d'intégration positive.

A titre de variante de la première forme d'exécution, il peut être envisagé de n'avoir que deux commutateurs 12 et 14 pour relier les deux résistances R1 et R2 à la source de tension Vp, Vn pour effectuer uniquement une première phase d'intégration, qui peut être une phase d'intégration positive. Les commutateurs 12, 14 sont fermés par le premier signal de commande S1 avec le signal de cadencement S_{CLK} dans un premier état, ce qui permet d'effectuer la démodulation du signal de vitesse angulaire par intégration durant cette demi-période du signal de cadencement. Quand le signal de cadencement S_{CLK} est dans un second état différent du premier état, les commutateurs 12, 14 sont ouverts pour effectuer un échantillonnage du signal d'intégration et après cela une remise à zéro du condensateur d'intégration C_{f}.

Il peut encore être envisagé de connecter en continu la première extrémité de la première résistance R1 à la borne de la tension haute Vp de la source de tension et la seconde extrémité de la seconde résistance R2 à la borne de la tension basse Vn. Cependant un premier commutateur est disposé entre le nœud de connexion des résistances, qui fournit le signal de mesure Sₘ, et la première entrée de l'amplificateur 17, qui est l'entrée négative. Il peut encore y avoir une résistance interne entre le premier commutateur et la première entrée de l'amplificateur. Dans ce cas de figure, le premier commutateur est commandé par le premier signal de commande S1. Dans une phase d'intégration, le premier commutateur est commandé pour être fermé, alors que le commutateur d'intégration et le commutateur d'échantillonnage sont ouverts. Au terme d'une demi-période du signal de cadencement S_{CLK} pendant laquelle une intégration du signal de mesure est effectuée, un échantillonnage du signal d'intégration suivi par une décharge du condensateur d'intégration dans la demi-période suivant la demi-période d'intégration, sont effectués.

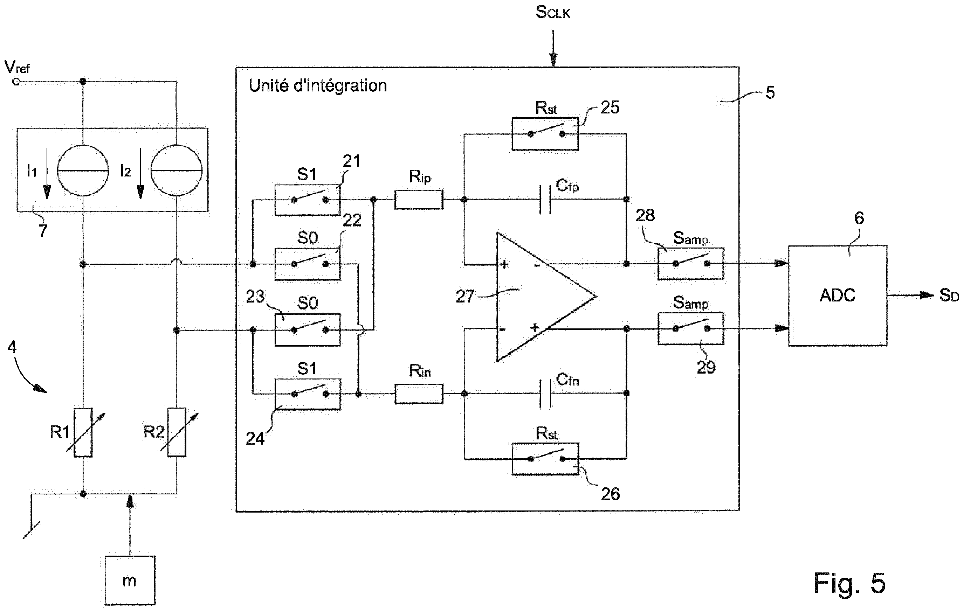

La figure 5 représente une seconde forme d'exécution des composants du circuit électronique pour la mesure de la vitesse de rotation. Dans cette seconde forme d'exécution, l'élément MEMS de mesure 4 est également composé de deux résistances R1, R2. Le nœud de connexion des deux résistances est relié mécaniquement à la masse m, mais cette fois-ci ce nœud de connexion est relié électriquement à la borne de terre tout comme la masse en mouvement. Une première extrémité libre de la première résistance R1 et une seconde extrémité libre de la seconde résistance R2 sont mécaniquement reliées à une structure fixe du gyroscope. Ainsi l'oscillation de la masse génère une variation de la valeur résistive des deux résistances R1 et R2. Le signal de variation de la première résistance R1 est de préférence déphasé de π par rapport au signal de variation de la seconde résistance R2.

Dans cette seconde forme d'exécution, les deux résistances R1 et R2 sont polarisées par au moins une unité à sources de courant 7. De préférence une première source de courant fournit un premier courant déterminé I1 à la première résistance R1 par sa première extrémité libre, alors qu'une seconde source de courant fourni un second courant déterminé I2 à la seconde résistance R2 par sa seconde extrémité libre. Les deux courants I1 et I2 sont de préférence d'égale valeur. Les première et seconde sources de courant 7 sont reliées à une borne de tension de référence Vref.

La première extrémité libre de la première résistance R1 fournit un premier signal de mesure Sₘ₁ à l'unité d'intégration 5, alors que la seconde extrémité libre de la seconde résistance R2 fournit un second signal de mesure Sₘ₂, qui est déphasé de π par rapport au premier signal de mesure Sₘ₁. Les premier et second signaux de mesure Sₘ₁ et Sₘ₂ sont reliés tout d'abord à un ensemble de commutateurs 21, 22, 23, 24 de l'unité d'intégration 5. Le premier signal de mesure Sₘ₁ est fourni à un premier commutateur 21 et à un second commutateur 22. Le second signal de mesure Sₘ₂ est fourni à un troisième commutateur 23 et à un quatrième commutateur 24. La sortie des premier et troisième commutateurs 21 et 23 est reliée à une première résistance interne Rᵢₚ, alors que la sortie des second et quatrième commutateurs 22 et 24 est reliée à une seconde résistance interne Rᵢₙ. Les premier et quatrième commutateurs 21 et 24 sont commandés par un signal de commande S1 pour une phase d'intégration définie positive, alors que les second et troisième commutateurs 22 et 23 sont commandés par un signal de commande S0 pour une phase d'intégration définie négative.

Quand le signal de commande S1 est à l'état "1" pour fermer les premier et quatrième commutateurs 21, 24, le premier signal de mesure Sₘ₁ est relié à la première résistance interne Rᵢₚ, et le second signal de mesure Sₘ₂ est relié à la seconde résistance interne Rᵢₙ. Le signal de commande S0 est à l'état "0" dans cette phase d'intégration positive. Quand le signal de commande S0 est à l'état "1" pour fermer les second et troisième commutateurs 22, 23, le premier signal de mesure Sₘ₁ est relié à la seconde résistance interne Rᵢₙ, et le second signal de mesure Sₘ₂ est relié à la première résistance interne Rᵢₚ. Le signal de commande S1 est à l'état "0" dans cette phase d'intégration négative.

L'unité d'intégration 5 comprend un amplificateur différentiel 27. La première résistance interne Rᵢₚ est reliée à une première entrée de l'amplificateur différentiel 27, alors que la seconde résistance interne Rᵢₙ est reliée à une seconde entrée de l'amplificateur différentiel 27. De préférence la première entrée est une entrée positive, alors que la seconde entrée est une entrée négative.

Un premier condensateur d'intégration C_{fp} est disposé entre la première entrée, qui est l'entrée positive de l'amplificateur 27 et une première sortie négative de l'amplificateur différentiel 27. Un cinquième commutateur 25 est connecté en parallèle au premier condensateur d'intégration C_{fp}. Ce cinquième commutateur 25 est commandé par un signal de commande Rst de manière à fermer ledit cinquième commutateur 25 lors d'une remise à zéro du premier condensateur d'intégration C_{fp} pour une nouvelle intégration. Un second condensateur d'intégration C_{fn} est disposé entre la seconde entrée, qui est l'entrée négative de l'amplificateur 27 et une seconde sortie positive de l'amplificateur différentiel 27. Un sixième commutateur 26 est connecté en parallèle au second condensateur d'intégration C_{fn}. Ce sixième commutateur 26 est commandé par un signal de commande Rst de manière à fermer ledit sixième commutateur 26 lors d'une remise à zéro du second condensateur d'intégration C_{fn} pour une nouvelle intégration.

Un premier signal d'intégration S_{I1} est fourni à la première sortie négative de l'amplificateur différentiel 27 et relatif à au moins une aire positive ou négative d'une phase d'intégration. Ce premier signal d'intégration S_{I1} contient une information de la vitesse angulaire. Au terme d'au moins une phase d'intégration et de préférence au terme de deux phases d'intégration sur une période complète du signal de cadencement S_{CLK}, un septième commutateur 28 peut être fermé par un signal de commande Samp. Ainsi le premier signal d'intégration S_{I1} est échantillonné dans un convertisseur analogique-numérique 6. Un second signal d'intégration S_{I2} est fourni à la seconde sortie positive de l'amplificateur différentiel 27. Au terme des phases d'intégration souhaitées, un huitième commutateur 29 peut être fermé par le signal de commande Samp. Le second signal d'intégration S_{I2} est également échantillonné en même temps dans le convertisseur analogique-numérique 6. Sur la base des deux signaux échantillonnés, le convertisseur analogique-numérique transmet un signal numérique de données S_{D} à une unité de traitement non représentée.

La commutation des différents commutateurs de cette seconde forme d'exécution par les signaux S0, S1, Rst et Samp peut être semblable à la commutation des commutateurs de la première forme d'exécution. Dans ces conditions, il ne sera pas répété la description des phases d'intégration et d'échantillonnage et de remise à zéro des condensateurs d'intégration. Les commutateurs des deux formes d'exécution peuvent être réalisés avec des transistors MOS et de préférence avec des transistors NMOS, dont la grille est commandée par tout signal de commande.

Il est à noter que pour cette seconde forme d'exécution avec une unité à sources de courant de polarisation des résistances de mesure, il peut être trimé les courants de polarisation I1 et I2 pour assurer également un gain lors de cette opération d'adaptation. Les résistances internes Rᵢ, Rᵢₚ, Rᵢₙ peuvent ne pas être montées pour les première et seconde formes d'exécution.

Selon une variante de réalisation de la seconde forme d'exécution, il peut être prévu un ensemble de commutateurs composé uniquement du premier commutateur 21 et du quatrième commutateur 24 pour une seule phase d'intégration quand le premier signal de commande S1 est par exemple à l'état "1". Durant la phase d'intégration, les commutateurs d'intégration et les commutateurs d'échantillonnage sont ouverts. Au terme d'une demi-période du signal de cadencement S_{CLK} pendant laquelle une intégration du signal de mesure est effectuée, un échantillonnage des signaux d'intégration suivi par une décharge des condensateurs d'intégration dans la demi-période suivant la demi-période d'intégration, sont effectués.

Comme représenté également à la figure 6 pour la description du circuit d'entraînement 3 du circuit électronique de mesure de la vitesse angulaire, il est bien utilisé un résonateur du type MEMS 2. Ce circuit d'entraînement 3 fait partie d'un gyroscope MEMS à haut facteur de qualité pour la mesure de la vitesse de rotation angulaire comme celle d'un disque. La rotation du résonateur peut injecter une énergie vibratoire dans la masse mobile m. Cependant, comme le système oscillant du résonateur MEMS possède une fréquence de résonance propre, et qu'il est très sélectif, l'énergie fournie en dehors de cette bande de fréquence est fortement atténuée. De ce fait, l'oscillation induite dans la masse du résonateur MEMS est très faible. La masse totale du gyroscope considéré est supposée tourner autour de 2000 degrés/seconde, c'est-à-dire à 5 tours/seconde. Cela correspond à une fréquence de 5 Hz, alors que le résonateur MEMS considéré possède une bande passante autour de 20 kHz. Comme les fréquences en jeu sont considérablement éloignées l'une de l'autre, le circuit d'entraînement 3 active le résonateur primaire.

Un tel résonateur 2 peut donc comprendre une masse sismique m, qui est reliée à un ressort k, à un élément d'amortissement d en parallèle du ressort, à un condensateur de détection C_{det} et à un condensateur d'activation C_{act}. En appliquant une tension sur le condensateur d'activation C_{act}, cela engendre une force électrostatique d'attraction et pour fournir une énergie électromécanique à l'ensemble sismique constitué de la masse m avec le ressort k et l'élément d'amortissement d. Ainsi il est possible de mettre en mouvement ladite masse m par une succession d'impulsions de tension fournies au condensateur d'activation.

La valeur capacitive du condensateur d'activation C_{act} ou du condensateur de détection C_{det} donne une image de la position de la masse sismique m et permet d'effectuer un asservissement dans le circuit d'entraînement 3 par l'intermédiaire du condensateur de détection C_{det}. La vitesse primaire ou la force dans une direction est ainsi mesurée par le condensateur de détection C_{det}. Par contre, la masse est mise en mouvement par l'intermédiaire du condensateur d'activation C_{act}.

Le circuit d'entraînement 3 permet de maintenir une amplitude définie d'oscillation de la masse sismique m. La fréquence d'oscillation de la masse m est dépendante du facteur k du ressort, dont une extrémité est reliée à une structure fixe du gyroscope. La masse sismique m est de préférence reliée à la borne de terre comme la structure fixe. Ceci garantit de bien découpler les deux condensateurs utilisés pour l'activation de l'oscillation de la masse m retenue par le ressort k et pour la détection du mouvement de la masse. De préférence, il est opéré une lecture de la dérivée du mouvement de la masse sismique m.

Le circuit d'entraînement 3 comprend un moyen de conversion 33 relié à une électrode fixe du condensateur de détection C_{det}. L'autre électrode du condensateur est reliée à la masse en mouvement, qui peut être reliée à la borne de terre. La distance entre les électrodes du condensateur de détection varie avec le déplacement de la masse. Le moyen de conversion permet d'effectuer une lecture par voie électronique analogique du mouvement de la masse m. Une variation de la distance I entre l'électrode fixée sur la masse et l'électrode dans une position fixe permet d'effectuer la mesure de la vitesse de mouvement de la masse. La valeur capacitive du condensateur de détection est donnée par C_{det} = ε·S/I, où la distance I est variable dans le temps, alors que la surface S des électrodes en regard l'une de l'autre reste constante.

Le moyen de conversion 33 est de préférence un convertisseur courant-tension 33, qui fournit en sortie un signal de dérivée der du mouvement de la masse sur la base d'un courant de détection I_{det} provenant du condensateur de détection C_{det}. Ce signal de dérivée der est généralement un signal sinusoïdal en tension, dont la fréquence correspond à la fréquence d'oscillation de la masse en mouvement. Ce signal de dérivée der en sortie du convertisseur 33 est fourni dans une première branche à une unité de décision 37.

L'amplitude du signal de dérivée der doit être comparée normalement à une référence ou consigne d'amplitude ref déterminée. Cette comparaison est effectuée par un moyen de comparaison dans l'unité de décision 37 ou par un moyen de comparaison, qui est disposé dans une seconde branche entre la sortie du convertisseur 33 et l'unité de décision 37. En fonction du niveau d'amplitude du signal de dérivée der par rapport à une référence ou consigne d'amplitude ref, l'unité de décision 37 est susceptible de fournir un signal d'activation drive à une électrode fixe du condensateur d'activation C_{act}. Ce signal d'activation drive est adapté pour entretenir l'oscillation de la masse sismique à une amplitude souhaitée.

Généralement l'unité de décision 37 agit comme une unité logique avec une fourniture de signaux impulsionnels d'activation drive de la masse m comme des signaux numériques. L'électrode fixe du condensateur d'activation peut recevoir des impulsions de tension positive pour l'activation selon cette forme d'exécution, mais des impulsions de tension négative peuvent aussi être utilisées pour l'activation. Ces signaux impulsionnels sont définis entre une valeur basse de tension, par exemple à 0 V d'une source de tension d'alimentation non représentée, et une valeur haute de tension, par exemple la tension fournie directement par la source de tension d'alimentation, qui peut être d'une valeur située entre 1.65 V et 3.3 V.

De préférence, le circuit d'entraînement 3 comprend un moyen de comparaison particulier en dehors de l'unité de décision 37 pour comparer l'amplitude du signal de dérivée der avec une consigne ou référence d'amplitude ref. Pour ce faire, le signal de dérivée der est fourni à l'entrée d'un détecteur d'amplitude 34. Ce détecteur d'amplitude peut être un détecteur de pics traditionnel pour détecter par exemple le point le plus élevé du signal de dérivée der ou un élément redresseur suivi par un filtre passe-bas. Un comparateur 35 en sortie du détecteur d'amplitude 34 compare l'amplitude du signal de dérivée der avec la consigne d'amplitude ref. L'amplitude du signal de dérivée est fournie à l'entrée négative du comparateur 35, alors que la consigne d'amplitude ref est fournie à l'entrée positive du comparateur 35. Si l'amplitude du signal de dérivée est plus basse que la consigne d'amplitude, cela signifie qu'il faut augmenter l'amplitude d'oscillation de la masse, alors que dans le cas contraire, il faut diminuer l'amplitude d'oscillation de la masse en mouvement.

Le signal de comparaison en sortie du comparateur 35 peut encore passer par un filtre de correction 36 pour fournir un signal de commande du niveau d'amplitude cmd à l'unité de décision 37. Ce signal de commande cmd est supérieur au point le plus élevé du signal de dérivée der s'il est nécessaire d'augmenter rapidement l'amplitude d'oscillation de la masse en mouvement. Par contre ce signal de commande cmd est inférieur au point le plus bas du signal de dérivée der s'il faut diminuer rapidement l'amplitude d'oscillation de la masse en mouvement. Les impulsions de tension drive fournies par l'unité de décision 37 au condensateur d'activation C_{act} sont donc dépendantes de la comparaison entre le signal de comparaison cmd fourni dans la seconde branche et le signal de dérivée der fourni dans la première branche.

Le circuit d'entraînement 3 comprend encore un générateur de démarrage 39, qui est utilisé dans une phase initiale de mise en fonction du circuit d'entraînement 3. Ce générateur 39 fournit un signal de démarrage au condensateur d'activation C_{act} à travers un multiplexeur 38 commandé par un signal de commutation Sc. L'autre entrée du multiplexeur reçoit le signal d'activation drive de l'unité de décision 37, mais dans une phase initiale de démarrage, le signal de commutation Sc permet de relier le générateur de démarrage 39 au condensateur d'activation C_{act}.

La fréquence du signal de démarrage du générateur 39 pour activer la masse m du résonateur 2 n'est pas synchronisée à la fréquence propre du ressort. Cela fait que la combinaison du signal de démarrage d'activation et du signal d'oscillation passe par une amplitude minimale (zéro) et une amplitude maximale due au déphasage des signaux. Cela n'a pas une grande importance dans le cas présent, car il peut être par exemple utilisé un simple oscillateur du type RC dans le générateur 39 pour la génération du signal d'activation au démarrage. Cependant il pourrait aussi être utilisé un autre type d'oscillateur sans rétroaction sur l'amplitude d'oscillation.

Après un temps déterminé par un compteur non représenté, le multiplexeur 38 est commandé par le signal de commutation Sc pour relier l'unité de décision 37 au condensateur d'activation C_{act} pour fermer la boucle d'asservissement d'amplitude d'oscillation sur la base d'une valeur de consigne fournie ref. Il est nécessaire d'avoir un signal de dérivée der d'un niveau suffisant pour pouvoir utiliser ce signal dans la boucle d'asservissement, c'est pourquoi il est nécessaire d'imposer au départ un signal d'activation de démarrage par le générateur de démarrage 39.

L'unité de décision 37 fournit également le signal de cadencement S_{CLK} pour la mesure de la vitesse angulaire. Comme précédemment indiqué ce signal de cadencement est fourni après comparaison d'un signal sinusoïdal déphasé de π/2 du signal porteur représenté par le courant de détection I_{det}, avec une tension de référence Vref.

A la figure 7, il est représenté une forme d'exécution du convertisseur courant-tension 33 utilisé pour la détection du mouvement de la masse oscillante et la fourniture du signal de dérivée du mouvement der. Une des électrodes du condensateur de détection C_{det}, qui est l'électrode fixe, est reliée à une entrée négative d'un amplificateur 43, par exemple un amplificateur opérationnel. L'autre électrode du condensateur, qui est l'électrode mobile reliée à la masse sismique m, est de préférence reliée à la borne de terre de la source de tension d'alimentation. Une tension de référence Vref est fournie à une entrée positive de l'amplificateur 43. Une résistance R relie l'entrée négative de l'amplificateur 43 et la sortie de l'amplificateur, qui fournit le signal de dérivée der. Le signal de dérivée der est ainsi un signal de tension de forme sinusoïdale par rapport à la tension de référence Vref, qui définit la tension en mode commun de ce signal de dérivée der. Ce signal est sinusoïdal également par le fait que le résonateur MEMS a un haut facteur de qualité avec une fréquence hautement sélective.

La figure 8 représente une forme d'exécution de l'unité de décision 37, qui représente une unité logique pour la fourniture de signaux impulsionnels drive comme des signaux numériques. L'unité de décision 37 comprend tout d'abord deux amplificateurs 71 et 72, qui sont des comparateurs rapides. La sortie de chaque amplificateur de comparaison est soit à un niveau haut représentatif d'un état "1", soit à un niveau bas représentatif d'un état "0" d'un signal numérique. Le premier amplificateur 71 reçoit à une entrée négative la tension de référence Vref et à une entrée positive le signal de dérivée der. La sortie de ce premier amplificateur comparateur 71 fournit directement le signal de cadencement S_{CLK} pour la mesure de la vitesse angulaire. Le second amplificateur 72 reçoit à une entrée négative le signal de commande d'amplitude cmd et à une entrée positive le signal de dérivée der. Quand le signal de dérivée der est supérieur à la tension de référence Vref et au signal de commande cmd, la sortie des amplificateurs 71, 72 est à l'état "1". Quand le signal de dérivée der est inférieur à la tension de référence Vref et au signal de commande cmd, la sortie des amplificateurs 71, 72 est à l'état "0".

L'unité de décision 37 comprend encore une première porte ET 75, qui reçoit à une première entrée le signal de sortie du premier amplificateur 71 et à une seconde entrée le signal de sortie du second amplificateur 72 inversé par un premier inverseur 73. L'unité de décision 37 comprend encore une seconde porte ET 76, qui reçoit à une première entrée le signal de sortie du second amplificateur 72 et à une seconde entrée le signal de sortie du premier amplificateur 71 inversé par un second inverseur 74. Le signal de sortie de la première porte ET 75 est fourni à une première entrée d'une porte OU 77, alors que le signal de sortie de la seconde porte ET 76 est fourni à une seconde entrée de la porte OU 77. Le signal d'activation préliminaire en sortie de la porte OU 77 peut encore passer par un élément élévateur de tension 78 pour fournir le signal d'activation drive en sortie de l'unité de décision 37, qui est un signal à impulsions, tel un signal numérique. Les impulsions du signal d'activation sont agencées en fonction du niveau du signal de commande cmd, du niveau de la tension de référence Vref en comparaison avec le signal de dérivée der.

Il est à noter que le signal d'activation préliminaire, qui est fourni à la sortie de la porte OU 77 peut être directement utilisé pour activer le condensateur d'activation. Cependant le signal obtenu en sortie de la porte OU 77 doit être de préférence décalé de niveau par l'élément élévateur de tension 78 en fonction du niveau de la tension d'alimentation la plus élevée du circuit électronique intégré pour maximiser l'énergie fournie au résonateur MEMS.

Il est encore à noter que le résonateur avec le circuit électronique susmentionnés sont prévus normalement pour la mesure d'une vitesse angulaire d'un gyroscope selon une direction ou un axe défini. Cependant il est tout à fait envisageable d'utiliser la conception du circuit électronique avec une ou plusieurs masses pour une mesure de vitesse angulaire selon un, deux ou trois axes avec un gyroscope du type MEMS à haut facteur de qualité.

A partir de la description qui vient d'être faite, plusieurs variantes du circuit électronique de mesure de la vitesse angulaire dans un gyroscope à résonateur du type MEMS, et le procédé de mise en action du circuit électronique, peuvent être conçues par l'homme du métier sans sortir du cadre de l'invention définie par les revendications. Un unique comparateur peut être utilisé pour comparer le signal de dérivée avec le signal de référence pour fournir le signal de cadencement.

## Revendications

1. Circuit électronique (1) pour la mesure de la vitesse de rotation dans un gyroscope à résonateur du type MEMS, le circuit électronique étant relié à au moins un résonateur (2) du gyroscope, le résonateur comprenant une masse (m) reliée à une structure du gyroscope par un ressort (k) et un élément d'amortissement (d), un élément d'activation (C_{act}) pour mettre en mouvement dans une direction la masse sur la base d'un signal d'activation (drive) fourni par un circuit d'entraînement (3), et un élément de détection (C_{det}) pour détecter le mouvement de la masse pour adapter au moins un niveau d'amplitude d'oscillation de la masse en mouvement dans une boucle d'asservissement du circuit d'entraînement (3), le circuit électronique (1) comprenant une unité d'intégration (5) cadencée par un signal de cadencement (S_{CLK}) provenant de la boucle d'asservissement du circuit d'entraînement (3), le signal de cadencement étant déphasé de π/2 par rapport à un signal de détection de l'élément de détection (C_{det}) en phase avec le signal porteur pour permettre à l'unité d'intégration de démoduler le signal de vitesse angulaire du signal de mesure,
**caractérisé en ce que** le circuit électronique (1) comprend un élément de mesure (4), qui comprend au moins deux résistances (R1, R2) montées sous forme de pont résistif, le nœud de connexion des deux résistances étant relié mécaniquement à la masse en mouvement, la variation de la valeur résistive de la première résistance (R1) étant inverse à la variation de la valeur résistive de la seconde résistance (R2) et variant à une fréquence identique à la fréquence d'oscillation de la masse en mouvement, les deux résistances (R1, R2) étant polarisées par au moins une source de tension (Vp, Vn), pour fournir au moins un signal de mesure (Sₘ) au nœud de connexion des deux résistances, le signal de mesure (Sₘ) étant composé d'une combinaison d'un signal porteur en phase avec l'oscillation de la masse en mouvement et d'un signal de vitesse angulaire déphasé de π/2, et
**en ce que** le nœud de connexion des deux résistances (R1, R2) étant relié à un commutateur à l'entrée de l'unité d'intégration (5) pour fournir le signal de mesure (Sₘ) à l'unité d'intégration (5), ce commutateur étant commandé par un signal de commande, qui dépend du signal de cadencement (S_{CLK}), le commutateur étant dans un état ouvert dans une phase d'intégration dans un premier état du signal de cadencement (S_{CLK}) et dans un état fermé dans un second état du signal de cadencement (S_{CLK}).

2. Circuit électronique (1) pour la mesure de la vitesse de rotation dans un gyroscope à résonateur du type MEMS, le circuit électronique étant relié à au moins un résonateur (2) du gyroscope, le résonateur comprenant une masse (m) reliée à une structure du gyroscope par un ressort (k) et un élément d'amortissement (d), un élément d'activation (C_{act}) pour mettre en mouvement dans une direction la masse sur la base d'un signal d'activation (drive) fourni par un circuit d'entraînement (3), et un élément de détection (C_{det}) pour détecter le mouvement de la masse pour adapter au moins un niveau d'amplitude d'oscillation de la masse en mouvement dans une boucle d'asservissement du circuit d'entraînement (3), le circuit électronique (1) comprenant une unité d'intégration (5) cadencée par un signal de cadencement (S_{CLK}) provenant de la boucle d'asservissement du circuit d'entraînement (3), le signal de cadencement étant déphasé de π/2 par rapport à un signal de détection de l'élément de détection (C_{det}) en phase avec le signal porteur pour permettre à l'unité d'intégration de démoduler le signal de vitesse angulaire du signal de mesure,
**caractérisé en ce que** le circuit électronique (1) comprend un élément de mesure (4), qui comprend au moins deux résistances (R1, R2) montées sous forme de pont résistif, le nœud de connexion des deux résistances étant relié à une borne de terre et mécaniquement à la masse en mouvement, **en ce que** les deux résistances (R1, R2) sont polarisées par une unité à sources de courant (7), une première source de courant (I1) étant reliée à une première extrémité de la première résistance (R1) et une seconde source de courant (I2) étant reliée à une seconde extrémité de la seconde résistance (R2), la variation de la valeur résistive de la première résistance (R1) étant inverse à la variation de la valeur résistive de la seconde résistance (R2) et variant à une fréquence identique à la fréquence d'oscillation de la masse en mouvement, **en ce qu'**un premier signal de mesure (Sₘ₁) est fourni à la première extrémité de la première résistance (R1), et **en ce qu'**un second signal de mesure (Sₘ₂) est fourni à la seconde extrémité de la seconde résistance (R2), les signaux de mesure (Sₘ₁; Sₘ₂) étant reçus par l'unité d'intégration (5) et composés d'une combinaison d'un signal porteur en phase avec l'oscillation de la masse en mouvement et d'un signal de vitesse angulaire déphasé de π/2, et
**en ce que** la première extrémité de la première résistance (R1) est reliée à un premier commutateur (21) à l'entrée de l'unité d'intégration (5), **en ce que** la seconde extrémité de la seconde résistance (R2) est reliée à un second commutateur (24) à l'entrée de l'unité d'intégration (5), **en ce que** les premier et second commutateurs (21, 24) sont commandés par un premier signal de commande (S1) dépendant du signal de cadencement (S_{CLK}), les premier et second commutateurs étant dans un état fermé dans une phase d'intégration dans un premier état du signal de cadencement (S_{CLK}) et dans un état ouvert dans un second état du signal de cadencement (S_{CLK}).

3. Circuit électronique (1) selon l'une des revendications 1 et 2, pour lequel l'élément de détection est un condensateur de détection (C_{det}), **caractérisé en ce que** le circuit d'entraînement (3) comprend un convertisseur courant-tension (33), qui fournit en sortie un signal de dérivée mathématique (der) du mouvement de la masse sur la base d'un courant de détection (I_{det}) du condensateur de détection, et **en ce que** le signal de cadencement (S_{CLK}) est obtenu à la sortie d'au moins un comparateur (71), qui compare le signal de dérivée (der) et une tension de référence (Vref).

4. Circuit électronique (1) selon la revendication 3, **caractérisé en ce que** le convertisseur courant-tension (33) comprend un amplificateur (43), dont une entrée négative est reliée à une électrode fixe du condensateur de détection (C_{det}) et une entrée positive reçoit la tension de référence (Vref), une résistance (R) étant placée entre l'entrée négative et une sortie de l'amplificateur (43), qui fournit le signal de dérivée (der) sous forme sinusoïdale référencée par rapport à la tension de référence (Vref) avec une alternance positive au-dessus de la tension de référence et une alternance négative au-dessous de la tension de référence.

5. Circuit électronique (1) selon la revendication 1, **caractérisé en ce qu'**une première extrémité libre de la première résistance (R1) et une seconde extrémité libre de la seconde résistance (R2) sont reliées inversement à une borne de potentiel haut (Vp) et à une borne de potentiel bas (Vn) de la source de tension par l'intermédiaire d'un ensemble de deux commutateurs (12, 14), qui sont commandés par un premier signal de commande (S1) dépendant du signal de cadencement (S_{CLK}), les premier et second commutateurs étant dans un état fermé dans une phase d'intégration dans un premier état du signal de cadencement (S_{CLK}) et dans un état ouvert dans un second état du signal de cadencement (S_{CLK}).

6. Circuit électronique (1) selon la revendication 1, **caractérisé en ce qu'**une première extrémité libre de la première résistance (R1) et une seconde extrémité libre de la seconde résistance (R2) sont reliées inversement et alternativement à une borne de potentiel haut (Vp) de la source de tension et à une borne de potentiel bas (Vn) de la source de tension par l'intermédiaire d'un ensemble de commutateurs (11, 12, 13, 14), qui sont commandés par des signaux de commande (S0, S1) dépendant du signal de cadencement (S_{CLK}).

7. Circuit électronique (1) selon la revendication 6, **caractérisé en ce que** l'ensemble de commutateurs comprend un premier commutateur (11) reliant la première extrémité de la première résistance (R1) au potentiel bas (Vn) de la source de tension, un second commutateur (12) reliant la première extrémité de la première résistance (R1) au potentiel haut (Vp) de la source de tension, un troisième commutateur (13) reliant la seconde extrémité de la seconde résistance (R2) au potentiel haut (Vp) de la source de tension et un quatrième commutateur (14) reliant la seconde extrémité de la seconde résistance (R2) au potentiel bas (Vn) de la source de tension, **en ce que** les second et quatrième commutateurs (12, 14) sont commandés par un premier signal de commande (S1) pour être fermés dans une première phase d'intégration durant un premier état du signal de cadencement (S_{CLK}) avec les premier et troisième commutateurs (11, 13) ouverts, et **en ce que** les premier et troisième commutateurs (11, 13) sont commandés par un second signal de commande (S0) pour être fermés dans une seconde phase d'intégration durant un second état du signal de cadencement (S_{CLK}) avec les second et quatrième commutateurs (12, 14) ouverts.

8. Circuit électronique (1) selon la revendication 1, **caractérisé en ce que** l'unité d'intégration (5) comprend un amplificateur (17), dont une première entrée reçoit le signal de mesure (Sₘ) et une seconde entrée reçoit une tension de référence (Vref), un condensateur d'intégration (Cf) étant disposé entre la première entrée et une sortie de l'amplificateur (17) pour fournir un signal d'intégration (S_{I}) dans une phase d'intégration dans un premier état du signal de cadencement (S_{CLK}).

9. Circuit électronique (1) selon la revendication 8, **caractérisé en ce que** la première entrée de l'amplificateur (17) est une entrée négative, **en ce que** la seconde entrée de l'amplificateur (17) est une entrée positive, et **en ce qu'**un commutateur de décharge (15) est connecté en parallèle du condensateur d'intégration (C_{f}) pour être commandé par un signal de commande de décharge (Rst) avant ou après au moins une phase d'intégration.

10. Circuit électronique (1) selon la revendication 9, **caractérisé en ce que** le circuit électronique (1) comprend un convertisseur analogique-numérique (6) pour échantillonner le signal d'intégration (S_{I}) et fournir un signal numérique de données (S_{D}), et **en ce qu'**un commutateur d'échantillonnage (16) de l'unité d'intégration (5) est disposé entre la sortie de l'amplificateur (17) et l'entrée du convertisseur (6), le commutateur d'échantillonnage étant commandé par un signal de commande d'échantillonnage (Samp) afin de fournir le signal d'intégration au convertisseur directement après au moins une phase d'intégration et avant une commande de décharge (Rst) du condensateur d'intégration (C_{f}).

11. Circuit électronique (1) selon la revendication 2, **caractérisé en ce que** la première extrémité de la première résistance (R1) est reliée à un premier commutateur (21) et à un second commutateur (22) à l'entrée de l'unité d'intégration (5), **en ce que** la seconde extrémité de la seconde résistance (R2) est reliée à un troisième commutateur (23) et à un quatrième commutateur (24) à l'entrée de l'unité d'intégration (5), **en ce que** les premier et quatrième commutateurs (21, 24) sont commandés par un premier signal de commande (S1) dépendant du signal de cadencement (S_{CLK}), **en ce que** les second et troisième commutateurs (22, 23) sont commandés par un second signal de commande (S0) dépendant du signal de cadencement (S_{CLK}), **en ce que** les premier et quatrième commutateurs (21, 24) sont fermés par le premier signal de commande (S1) dans une première phase d'intégration, alors que les second et troisième commutateurs (22, 23) sont ouverts, et **en ce que** les second et troisième commutateurs (22, 23) sont fermés par le second signal de commande (S0) dans une seconde phase d'intégration successive, alors que les premier et quatrième commutateurs (21, 24) sont ouverts.

12. Circuit électronique (1) selon la revendication 2, **caractérisé en ce que** l'unité d'intégration (5) comprend un amplificateur différentiel (27), dont une première entrée reçoit au moins le premier signal de mesure (Sₘ₁) dans une phase d'intégration et une seconde entrée reçoit au moins le second signal de mesure (Sₘ₂) dans la phase d'intégration, **en ce qu'**un premier condensateur d'intégration (C_{f1}) est disposé entre la première entrée et une première sortie de l'amplificateur différentiel (27) pour fournir un premier signal d'intégration (S_{I1}) dans la phase d'intégration dans un premier état du signal de cadencement (S_{CLK}), et **en ce qu'**un second condensateur d'intégration (C_{f2}) est disposé entre la seconde entrée et une seconde sortie de l'amplificateur différentiel (27) pour fournir un second signal d'intégration (S_{I2}).

13. Circuit électronique (1) selon la revendication 12, **caractérisé en ce que** la première entrée de l'amplificateur différentiel (27) est une entrée positive, **en ce que** la seconde entrée de l'amplificateur (27) est une entrée négative, **en ce qu'**un premier commutateur de décharge (25) est connecté en parallèle du premier condensateur d'intégration (C_{f1}) pour être commandé par un signal de commande de décharge (Rst) avant ou après au moins une phase d'intégration, et **en ce qu'**un second commutateur de décharge (26) est connecté en parallèle du second condensateur d'intégration (C_{f2}) pour être commandé par le signal de commande de décharge (Rst) avant ou après au moins une phase d'intégration.

14. Circuit électronique (1) selon la revendication 13, **caractérisé en ce que** le circuit électronique (1) comprend un convertisseur analogique-numérique (6) pour échantillonner le premier signal d'intégration (S_{I1}) et le second signal d'intégration (S_{I2}) et fournir un signal numérique de données (S_{D}), et **en ce qu'**un premier commutateur d'échantillonnage (28) de l'unité d'intégration (5) est disposé entre la première sortie de l'amplificateur différentiel (27) et une première entrée du convertisseur analogique-numérique (6), **en ce qu'**un second commutateur d'échantillonnage (29) de l'unité d'intégration (5) est disposé entre la seconde sortie de l'amplificateur différentiel (27) et une seconde entrée du convertisseur analogique-numérique (6), et **en ce que** les premier et second commutateurs d'échantillonnage (28, 29) sont commandés par un signal de commande d'échantillonnage (Samp) afin de fournir les premier et second signaux d'intégration au convertisseur directement après au moins une phase d'intégration et avant une commande de décharge (Rst) des condensateurs d'intégration (C_{f1}, C_{f2}).

15. Procédé de mise en action du circuit électronique (1) de mesure de la vitesse de rotation dans un gyroscope à résonateur du type MEMS, selon l'une des revendications 1 et 2, **caractérisé en ce que** le procédé comprend les étapes de :
- fournir au moins un signal de mesure (Sₘ) par au moins deux résistances (R1, R2) montées sous forme de pont résistif et polarisées par au moins une source de tension (Vp, Vn) ou une unité à sources de courant (7), le nœud de connexion des deux résistances étant relié mécaniquement à la masse en mouvement, la variation de la valeur résistive de la première résistance (R1) étant inverse à la variation de la valeur résistive de la seconde résistance (R2), et dépendant de l'oscillation de la masse du résonateur à une unité d'intégration (5) dans une phase d'intégration dépendant du signal de cadencement (S_{CLK}), et
- fournir un signal d'intégration (S_{I}) relatif au signal de vitesse angulaire démodulé du signal de mesure en sortie de l'unité d'intégration (5) pendant la durée d'une demi-période d'un premier état du signal de cadencement (S_{CLK}).

16. Procédé de mise en action du circuit électronique (1) selon la revendication 15, **caractérisé en ce que** le signal de mesure (Sₘ) est fourni à l'unité d'intégration pendant une première phase d'intégration dans un premier état du signal de cadencement (S_{CLK}), **en ce qu'**un signal de mesure (Sₘ) inversé est fourni à l'unité d'intégration (5) pendant une seconde phase d'intégration dans un second état du signal de cadencement (S_{CLK}).

17. Procédé de mise en action du circuit électronique (1) selon la revendication 15, **caractérisé en ce qu'**au terme de la phase d'intégration, le signal d'intégration (S_{I}) est fourni à un convertisseur analogique-numérique (6), et **en ce qu'**après la fourniture du signal d'intégration au convertisseur, une décharge du condensateur d'intégration (C_{f}) est effectuée avant une nouvelle phase d'intégration en étant cadencé par le signal de cadencement (S_{CLK}).

18. Procédé de mise en action du circuit électronique (1) selon la revendication 15, pour lequel le circuit électronique (1) comprend au moins deux résistances (R1, R2) montées sous forme de pont résistif, dont le nœud de connexion des résistances (R1, R2) est relié à une borne de terre, et pour lequel une première source de courant (I1) est reliée à une première extrémité de la première résistance (R1) pour fournir un premier signal de mesure (Sₘ₁) à l'unité d'intégration (5) et une seconde source de courant (I2) est reliée à une seconde extrémité de la seconde résistance (R2) pour fournir un second signal de mesure (Sₘ₂) à l'unité d'intégration (5), **caractérisé en ce que** des premier et second signaux d'intégration (S_{I1}, S_{I2}) sont fournis en sortie de l'unité d'intégration sur la base des premier et second signaux de mesure et pendant une phase d'intégration dans un premier état du signal de cadencement (S_{CLK}).

19. Procédé de mise en action du circuit électronique (1) selon la revendication 18, **caractérisé en ce qu'**au terme de la phase d'intégration, les premier et second signaux d'intégration (S_{I1}, S_{I2}) sont fournis à un convertisseur analogique-numérique (6), et **en ce qu'**après la fourniture des premier et second signaux d'intégration au convertisseur, une décharge des condensateurs d'intégration (C_{f1}, C_{f2}) est effectuée avant une nouvelle phase d'intégration en étant cadencé par le signal de cadencement (S_{CLK}).

20. Procédé de mise en action du circuit électronique (1) selon la revendication 18, **caractérisé en ce que** le premier signal de mesure (Sₘ₁) est fourni à une première entrée d'un amplificateur différentiel (27) de l'unité d'intégration (5) dans une première phase d'intégration, **en ce que** le second signal de mesure (Sₘ₂) est fourni à une seconde entrée de l'amplificateur différentiel (27) dans la première phase d'intégration, **en ce que** le premier signal de mesure (Sₘ₁) est fourni à la seconde entrée de l'amplificateur différentiel (27) dans une seconde phase d'intégration successive, **en ce que** le second signal de mesure (Sₘ₂) est fourni à la première entrée de l'amplificateur différentiel (27) dans la seconde phase d'intégration successive, et **en ce que** les premier et second signaux d'intégration (S_{I1}, S_{I2}) sont fournis en sortie de l'unité d'intégration au terme d'une période complète du signal de cadencement (S_{CLK}).

## Patentansprüche

1. Elektronischer Schaltkreis (1) zum Messen der Drehgeschwindigkeit in einem Resonatorgyroskop auf MEMS-Technik basierend, wobei der Elektronische Schaltkreis mit mindestens einem Resonator (2) des Gyroskops verbunden ist, und der Resonator eine Masse (m), die mit einer Struktur des Gyroskops durch eine Feder (k) und ein Dämpfungselement (d) verbunden ist, ein Aktivierungselement (Cact) zum Bewegen der Masse in eine Richtung auf Grundlage eines Aktivierungssignals (drive), das von einer Antriebsschaltung (3) geliefert wird, und ein Sensorelement (Cdet) zum Erfassen der Bewegung der Masse zur Anpassung an mindestens einen Schwingungsamplitudenpegel der bewegten Masse in einem Regelkreis der Antriebsschaltung (3) umfasst, wobei der Elektronische Schaltkreis (1) eine durch ein Taktsignal (SCLK) getaktete Integrationseinheit (5) umfasst, das aus dem Regelkreis der Antriebsschaltung (3) stammt, wobei das Taktsignal um π/2 phasenverschoben ist in Bezug auf ein Detektionssignal des Sensorelements (Cdet) das mit dem Trägersignal in Phase ist, damit die Integrationseinheit das Winkelgeschwindigkeitssignal des Messsignals demodulieren kann,
**dadurch gekennzeichnet, dass** der Elektronische Schaltkreis (1) ein Messelement (4) umfasst, das mindestens zwei als Widerstandsbrücke verbaute Widerstände (R1, R2) umfasst, wobei der Verbindungsknoten der beiden Widerstände mechanisch mit der bewegten Masse verbunden ist, die Änderung des Widerstandswerts des ersten Widerstands (R1) umgekehrt zur Änderung des Widerstandswerts des zweiten Widerstands (R2) ist und sich mit einer Frequenz ändert, die mit der Schwingungsfrequenz der bewegten Masse identisch ist, wobei die zwei Widerstände (R1, R2) durch mindestens eine Spannungsquelle (Vp, Vn) unter Vorspannung stehen, um mindestens ein Messsignal (Sm) am Verbindungsknoten der zwei Widerstände zu liefern, wobei das Messsignal (Sm) zusammengesetzt ist aus einer Kombination eines Trägersignals, das in Phase ist mit der Schwingung der bewegten Masse, und eines Winkelgeschwindigkeitssignals, das um π/2 phasenverschoben ist, und
dass der Verbindungsknoten der beiden Widerstände (R1, R2) mit einem Schalter am Eingang der Integrationseinheit (5) zum Liefern des Messsignals (Sm) für die Integrationseinheit verbunden ist (5), wobei dieser Schalter von einem vom Taktsignal (S_{CLK}) abhängigen Steuersignal gesteuert wird, der Schalter sich in einer Integrationsphase in einem ersten Zustand des Taktsignals (S_{CLK}) in einem offenen Zustand und in einem zweiten Zustand des Taktsignals (S_{CLK}) in einem geschlossenen Zustand befindet.

2. Elektronischer Schaltkreis (1) zum Messen der Drehgeschwindigkeit in einem Resonatorgyroskop auf MEMS-Technik basierend, wobei der Elektronische Schaltkreis mit mindestens einem Resonator (2) des Gyroskops verbunden ist, wobei der Resonator eine Masse (m), die mit einer Struktur des Gyroskops durch eine Feder (k) und ein Dämpfungselement (d) verbunden ist, ein Aktivierungselement (Cact) zum Bewegen der Masse in eine Richtung auf Grundlage eines Aktivierungssignals (drive), das von einer Antriebsschaltung (3) geliefert wird, und ein Sensorelement (Cdet) zum Erfassen der Bewegung der Masse zur Anpassung an mindestens einen Schwingungsamplitudenpegel der bewegten Masse in einem Regelkreis der Antriebsschaltung (3) umfasst, wobei der Elektronische Schaltkreis (1) eine durch ein Taktsignal (S_{CLK}) getaktete Integrationseinheit (5) aufweist, das aus dem Regelkreis der Antriebsschaltung (3) stammt, wobei das Taktsignal um π/2 phasenverschoben ist in Bezug auf ein Detektionssignal des Sensorelements (Cdet), das mit dem Trägersignal in Phase ist, damit die Integrationseinheit das Winkelgeschwindigkeitssignal des Messsignals demodulieren kann,
**dadurch gekennzeichnet, dass** der Elektronische Schaltkreis (1) ein Messelement (4) umfasst, das mindestens zwei Widerstände (R1, R2) umfasst, die als Widerstandsbrücke montiert sind, wobei der Verbindungsknoten der beiden Widerstände mit einer Erdungsklemme und mechanisch mit der bewegten Masse verbunden ist, dass die beiden Widerstände (R1, R2) durch eine Stromquelleneinheit (7) unter Vorspannung stehen, wobei eine erste Stromquelle (I1) mit einem ersten Ende des ersten Widerstands (R1) verbunden ist und eine zweite Stromquelle (I2) mit einem zweiten Ende des zweiten Widerstands (R2) verbunden ist, wobei die Änderung des Widerstandswerts des ersten Widerstands (R1) zur Änderung des Widerstandswerts des zweiten Widerstands (R2) umgekehrt ist und sich mit einer Frequenz ändert, die mit der Schwingungsfrequenz der bewegten Masse identisch ist, dass ein erstes Messsignal (Sₘ₁) an ein erstes Ende des ersten Widerstands (R1) geliefert wird, und dass ein zweites Messsignal (Sₘ₂) an ein zweites Ende des zweiten Widerstands (R2) geliefert wird, wobei die Messsignale (Sₘ₁; Sm₂) von der Integrationseinheit (5) empfangen werden und zusammengesetzt sind aus einer Kombination eines Trägersignals, das in Phase ist mit der Schwingung der bewegten Masse, und eines Winkelgeschwindigkeitssignals, das um π/2 phasenverschoben ist, und
dass das erste Ende des ersten Widerstands (R1) mit einem ersten Schalter (21) am Eingang der Integrationseinheit (5) verbunden ist, dass das zweite Ende des zweiten Widerstands (R2) mit einem zweiten Schalter (24) am Eingang der Integrationseinheit (5) verbunden ist, dass der erste und zweite Schalter (21, 24) durch ein erstes Steuersignal (S1) gesteuert werden, das vom Taktsignal (SCLK) abhängt, wobei der erste und zweite Schalter in einer Integrationsphase in einem ersten Zustand des Taktsignals (SCLK) in einem geschlossenen Zustand und in einem zweiten Zustand des Taktsignals (SCLK) in einem offenen Zustand sind.

3. Elektronischer Schaltkreis (1) nach einem der Ansprüche 1 und 2, bei dem das Sensorelement ein Detektorkondensator (Cdet) ist, **dadurch gekennzeichnet, dass** die Antriebsschaltung (3) einen Strom-Spannungswandler (33) umfasst, der auf Grundlage eines Detektionsstroms (I_{det}) des Detektorkondensators ein mathematisch abgeleitetes Signal (der) der Bewegung der Masse liefert, und dass das Taktsignal (S_{CLK}) am Ausgang mindestens eines Komparators (71) erhalten wird, der das Ableitungssignal (der) und eine Referenzspannung (Vref) vergleicht.

4. Elektronischer Schaltkreis (1) nach Anspruch 3, **dadurch gekennzeichnet, dass** der Strom-Spannungswandler (33) einen Verstärker (43) umfasst, dessen negativer Eingang mit einer festen Elektrode des Detektorkondensators (Cdet) verbunden ist und ein positiver Eingang die Referenzspannung (Vref) empfängt, wobei ein Widerstand (R) zwischen dem negativen Eingang und einem Ausgang des Verstärkers (43) angeordnet ist, der das Ableitungssignal (der) sinusförmig in Bezug auf die Referenzspannung (Vref) mit einer positiven Halbwelle oberhalb der Referenzspannung und einer negativen Halbwelle unterhalb der Referenzspannung liefert.

5. Elektronischer Schaltkreis (1) nach Anspruch 1, **dadurch gekennzeichnet, dass** ein erstes freies Ende des ersten Widerstands (R1) und ein zweites freies Ende des zweiten Widerstands (R2) umgekehrt mit einem Hochpotentialanschluss (Vp) und einem Niederpotentialanschluss (Vn) der Spannungsquelle verbunden sind über einen Satz von zwei Schaltern (12, 14), die von einem ersten Steuersignal (S1), das vom Taktsignal (SCLK), abhängig ist, gesteuert werden, wobei der erste und zweite Schalter in einer Integrationsphase in einem ersten Zustand des Taktsignals (SCLK) in einem geschlossenen Zustand und in einem zweiten Zustand des Taktsignals (SCLK) in einem offenen Zustand sind.

6. Elektronischer Schaltkreis (1) nach Anspruch 1, **dadurch gekennzeichnet, dass** ein erstes freies Ende des ersten Widerstands (R1) und ein zweites freies Ende des zweiten Widerstands (R2) umgekehrt und abwechselnd mit einem Hochpotentialanschluss (Vp) der Spannungsquelle und einem Niederpotentialanschluss (Vn) der Spannungsquelle über einen Satz von Schaltern (11, 12, 13, 14) verbunden sind, die von Steuersignalen (SO, S1) gesteuert werden, die wiederum vom Taktsignal (SCLK) abhängig sind.

7. Elektronischer Schaltkreis (1) nach Anspruch 6, **dadurch gekennzeichnet, dass** ein Satz von Schaltern einen ersten Schalter (11), der das erste Ende des ersten Widerstands (R1) mit dem Niederpotentialanschluss (Vn) der Spannungsquelle verbindet, einen zweiten Schalter (12), der das erste Ende des ersten Widerstandes (R1) mit dem Hochpotentialanschluss (Vp) der Spannungsquelle verbindet, einen dritten Schalter (13), der das zweite Ende des zweiten Widerstandes (R2) mit dem Hochpotentialanschluss (Vp) der Spannungsquelle verbindet, und einen vierten Schalter (14), der das zweite Ende des zweiten Widerstandes (R2) mit dem Niederpotentialanschluss (Vn) der Spannungsquelle verbindet, umfasst, dass der zweite und der vierte Schalter (12, 14) durch ein erstes Steuersignal (S1) gesteuert werden, damit sie in einer ersten Integrationsphase während eines ersten Zustands des Taktsignals (S_{CLK}) geschlossen werden, wobei der erste und der dritte Schalter (11, 13) offen sind, und dass der erste und der dritte Schalter (11, 13) durch ein Steuersignal (S0) gesteuert werden, damit sie in einer zweiten Integrationsphase während eines zweiten Zustands des Taktsignals (S_{CLK}) geschlossen werden, wobei der zweite und der vierte Schalter (12, 14) offen sind.

8. Elektronischer Schaltkreis (1) nach Anspruch 1, **dadurch gekennzeichnet, dass** die Integrationseinheit (5) einen Verstärker (17) umfasst, dessen erster Eingang das Messsignal (Sm) empfängt und dessen zweiter Eingang eine Referenzspannung (Vref) empfängt, wobei ein Integrationskondensator (Cf) zwischen dem ersten Eingang und dem Ausgang des Verstärkers (17) angeordnet ist, um ein Integrationssignal (S_{I}) in einer Integrationsphase in einem ersten Zustand des Taktsignals (S_{CLK}) zu liefern.

9. Elektronischer Schaltkreis (1) nach Anspruch 8, **dadurch gekennzeichnet, dass** der erste Eingang des Verstärkers (17) ein negativer Eingang ist, dass der zweite Eingang des Verstärkers (17) ein positiver Eingang ist und dass parallel zum Integrationskondensator (Cf) ein Entladeschalter (15) geschaltet ist, damit er durch ein Entladesteuerungssignal (Rst) vor oder nach mindestens einer Integrationsphase gesteuert wird.

10. Elektronischer Schaltkreis (1) nach Anspruch 9, **dadurch gekennzeichnet, dass** der Elektronische Schaltkreis (1) einen Analog-Digital-Wandler (6) umfasst, um das Integrationssignal (S_{I}) abzutasten und ein digitales Datensignal (SD) zu liefern, und dass ein Abtastschalter (16) der Integrationseinheit (5) zwischen dem Ausgang des Verstärkers (17) und dem Eingang des Wandlers (6) angeordnet ist, wobei der Abtastschalter durch ein Abtaststeuersignal (Samp) gesteuert wird, um dem Wandler unmittelbar nach mindestens einer Integrationsphase und vor einer Entladesteuerung (Rst) des Integrationskondensators (Cf) das Integrationssignal zu liefern.

11. Elektronischer Schaltkreis (1) nach Anspruch 2, **dadurch gekennzeichnet, dass** das erste Ende des ersten Widerstands (R1) mit einem ersten Schalter (21) und einem zweiten Schalter (22) am Eingang der Integrationseinheit (5) verbunden ist, dass das zweite Ende des zweiten Widerstands (R2) mit einem dritten Schalter (23) und einem vierten Schalter (24) am Eingang der Integrationseinheit (5) verbunden ist, dass der erste und der vierte Schalter (21, 24) durch ein erstes Steuersignal (S1) gesteuert werden, das vom Taktsignal (SCLK) abhängt, dass der zweite und der dritte Schalter (22, 23) durch ein zweites Steuersignal (S0) gesteuert werden, das vom Taktsignal abhängt (S_{CLK}), dass der erste und der vierte Schalter (21, 24) in einer ersten Integrationsphase durch das erste Steuersignal (S1) geschlossen werden, während der zweite und der dritte Schalter (22, 23) geöffnet sind, und dass der zweite und der dritte Schalter (22, 23) in einer zweiten nachfolgenden Integrationsphase durch das zweite Steuersignal (S0) geschlossen werden, während der erste und der vierte Schalter (21, 24) offen sind.

12. Elektronischer Schaltkreis (1) nach Anspruch 2, **dadurch gekennzeichnet, dass** die Integrationseinheit (5) einen Differentialverstärker (27) umfasst, dessen erster Eingang mindestens das erste Messsignal (Sₘ₁) in einer Integrationsphase empfängt und dessen zweiter Eingang mindestens das zweite Messsignal (Sₘ₂) in der Integrationsphase empfängt, dass ein erster Integrationskondensator (C_{f1}) zwischen dem ersten Eingang und dem ersten Ausgang des Differentialverstärkers (27) zum Liefern eines ersten Integrationssignals (S_{I1}) in der Integrationsphase in einem ersten Zustand des Taktsignals (S_{CLK}) angeordnet ist, und dass ein zweiter Integrationskondensator (C_{f2}) zum Liefern eines zweiten Integrationssignals (S_{I2}) zwischen dem zweiten Eingang und dem zweiten Ausgang des Differentialverstärkers (27) angeordnet ist.

13. Elektronischer Schaltkreis (1) nach Anspruch 12, **dadurch gekennzeichnet, dass** der erste Eingang des Differentialverstärkers (27) ein positiver Eingang ist, dass der zweite Eingang des Verstärkers (27) ein negativer Eingang ist, dass ein erster Entladeschalter (25) parallel zum ersten Integrationskondensator (C_{f1}) geschaltet ist, um vor oder nach mindestens einer Integrationsphase durch ein Entladesteuersignal (Rst) gesteuert zu werden, und dass ein zweiter Entladeschalter (26) parallel mit dem zweiten Integrationskondensator (C_{f2}) geschaltet ist, um durch das Entladesteuersignal (Rst) vor oder nach mindestens einer Integrationsphase gesteuert zu werden.

14. Elektronischer Schaltkreis (1) nach Anspruch 13, **dadurch gekennzeichnet, dass** der Elektronische Schaltkreis (1) einen Analog-Digital-Wandler (6) umfasst, um das erste Integrationssignal (S_{I1}) und das zweite Integrationssignal (S_{I}2) abzutasten und ein digitales Datensignal (S_{D}) zu liefern, und dass ein erster Abtastschalter (28) der Integrationseinheit (5) zwischen dem ersten Ausgang des Differenzverstärkers (27) und einem ersten Eingang des Analog-Digital-Wandlers (6) angeordnet ist, dass ein zweiter Abtastschalter (29) der Integrationseinheit (5) zwischen dem zweiten Ausgang des Differenzverstärkers (27) und einem zweiten Eingang des Analog-Digital-Wandlers (6) angeordnet ist, und dass der erste und der zweite Abtastschalter (28), 29) durch ein Abtaststeuersignal (Samp) gesteuert werden, um dem Wandler das erste und das zweite Integrationssignal unmittelbar nach mindestens einer Integrationsphase und vor einer Entladesteuerung (Rst) der Integrationskondensatoren (C₁₁, C₁₂) zu liefern.

15. Verfahren zum Aktivieren des elektronischen Schaltkreises (1) zum Messen der Drehgeschwindigkeit in einem Resonatorgyroskop auf MEMS-Technik basierend nach einem der Ansprüche 1 und 2, **dadurch gekennzeichnet, dass** das Verfahren die folgenden Schritte umfasst:
- Liefern mindestens eines Messsignals (Sm) durch mindestens zwei Widerstände (R1, R2), die als Widerstandsbrücke und durch mindestens eine Spannungsquelle (Vp, Vn) oder eine Stromquelleneinheit (7) unter Vorspannung stehen, wobei der Verbindungsknoten der beiden Widerstände mit der bewegten Masse mechanisch verbunden ist, wobei die Änderung des Widerstandswerts des ersten Widerstands (R1) umgekehrt zur Änderung des Widerstandswerts des zweiten Widerstands (R2) ist und abhängig ist von der Schwingung der Resonatormasse zu einer Integrationseinheit (5) in einer Integrationsphase, die abhängig ist vom Taktsignal (S_{CLK}), und
- Liefern eines Integrationssignals (S_{I}) in Bezug auf das demodulierte Winkelgeschwindigkeitssignal des Messsignals am Ausgang der Integrationseinheit (5) während der Halbperiode eines ersten Zustands des Taktsignals (S_{CLK}).

16. Verfahren zum Aktivieren des elektronischen Schaltkreises (1) nach Anspruch 15, **dadurch gekennzeichnet, dass** das Messsignal (Sm) der Integrationseinheit während einer ersten Integrationsphase in einem ersten Zustand des Taktsignals (S_{CLK}) zugeführt wird, dass ein umgekehrtes Messsignal (Sm) der Integrationseinheit (5) während einer zweiten Integrationsphase in einem zweiten Zustand des Taktsignals (S_{CLK}) zugeführt wird.

17. Verfahren zum Aktivieren des elektronischen Schaltkreises (1) nach Anspruch 15, **dadurch gekennzeichnet, dass** am Ende der Integrationsphase das Integrationssignal (S_{I}) einem Analog-Digital-Wandler (6) zugeführt wird und dass nach Zuführen des Integrationssignals an den Wandler eine Entladung des Integrationskondensators (C_{f}) vor einer neuen Integrationsphase erfolgt, indem sie durch das Taktsignal (S_{CLK}) getaktet wird.

18. Verfahren zum Aktivieren des elektronischen Schaltkreises (1) nach Anspruch 15, bei dem der elektronische Schaltkreis (1) mindestens zwei Widerstände (R1, R2) umfasst, die als Widerstandsbrücke montiert sind, deren Verbindungsknoten der Widerstände (R1, R2) mit einem Masseanschluss verbunden ist und für den eine erste Stromquelle (I1) mit einem ersten Ende des ersten Widerstands (R1) verbunden ist, um ein erstes Messsignal (Sₘ₁) an die Integrationseinheit (5) zu liefern, und eine zweite Stromquelle (I2) mit einem zweiten Ende des zweiten Widerstands (R2) verbunden ist, um ein zweites Messsignal (Sm2) an die Integrationseinheit (5) zu liefern, **dadurch gekennzeichnet, dass** das erste und zweite Integrationssignal (S_{I1}, S_{I2}) am Ausgang der Integrationseinheit auf Grundlage des ersten und zweiten Messsignals und während einer Integrationsphase in einem ersten Zustand des Taktsignals (SCLK) geliefert werden.

19. Verfahren zum Aktivieren des elektronischen Schaltkreises (1) nach Anspruch 18, **dadurch gekennzeichnet, dass** am Ende der Integrationsphase das erste und zweite Integrationssignal (S_{I1}, S_{I2}) einem Analog-Digital-Wandler (6) zugeführt werden und nach dem Zuführen des ersten und zweiten Integrationssignals an den Wandler eine Entladung der Integrationskondensatoren (C_{f1}, C_{f2}) vor einer neuen Integrationsphase erfolgt, indem sie durch das Taktsignal (S_{CLK}) getaktet wird.

20. Verfahren zum Aktivieren des elektronischen Schaltkreises (1) nach Anspruch 18, **dadurch gekennzeichnet, dass** das erste Messsignal (Sₘ₁) einem ersten Eingang eines Differenzverstärkers (27) der Integrationseinheit (5) in einer ersten Integrationsphase zugeführt wird, dass das zweite Messsignal (Sₘ₂) einem zweiten Eingang des Differenzverstärkers (27) in der ersten Integrationsphase zugeführt wird, dass das erste Messsignal (Sₘ₁) dem zweiten Eingang des Differenzverstärkers (27) in einer zweiten aufeinanderfolgenden Integrationsphase zugeführt wird, dass das zweite Messsignal (Sₘ₂) dem ersten Eingang des Differenzverstärkers (27) in einer zweiten aufeinanderfolgenden Integrationsphase zugeführt wird, und dass das erste und zweite Integrationssignal (S_{I1}, S_{I2}) am Ausgang der Integrationseinheit am Ende einer vollständigen Periode des Taktsignals (S_{CLK}) zugeführt werden.

## Claims

1. Electronic circuit (1) for measuring rotational speed in a gyroscope with a MEMS resonator, the electronic circuit being connected to at least one resonator (2) of the gyroscope, the resonator including a mass (m) connected to a structure of the gyroscope by a spring (k) and a damping element (d), an actuation element (C_{act}) for setting in motion the mass in one direction based on an actuation signal (drive), supplied by a drive circuit (3), and a detection element (C_{det}) for detecting motion of the mass to adapt at least one level of oscillation amplitude of the moving mass in a control loop of the drive circuit (3), the electronic circuit (1) including an integration unit (5) clocked by a clocking signal (S_{CLK}) originating from the control loop of the drive circuit (3), the clocking signal being phase shifted by π/2 relative to a detection signal of the detection element (C_{det}) in phase with the carrier signal to allow the integration unit to demodulate the angular speed signal from the measurement signal,
**characterized in that** the electronic circuit (1) includes a measurement element (4), which includes at least two resistors (R1, R2) mounted in the form of a resistive bridge, the node connecting the two resistors being mechanically connected to the moving mass, the variation in resistive value of the first resistor (R1) being inverse to the variation in resistive value of the second resistor (R2) and varying at a frequency identical to the oscillation frequency of the moving mass, the two resistors (R1, R2) being polarized by at least one voltage source (Vp, Vn) to supply at least one measurement signal (Sₘ) to the node connecting the two resistors, the measurement signal (Sₘ) being formed of a combination of a carrier signal in phase with the oscillation of the moving mass and of an angular speed signal phase shifted by π/2, and
**in that** the node connecting the two resistors (R1, R2) is connected to a switch at the input of the integration unit (5) to supply the measurement signal (Sₘ) to the integration unit (5), this switch being controlled by a control signal, which depends on the clocking signal (S_{CLK}), the switch being in an open state in an integration phase in a first state of the clocking signal (S_{CLK}) and in a closed state in a second state of the clocking signal (S_{CLK}).

2. Electronic circuit (1) for measuring rotational speed in a gyroscope with a MEMS resonator, the electronic circuit being connected to at least one resonator (2) of the gyroscope, the resonator including a mass (m) connected to a structure of the gyroscope by a spring (k) and a damping element (d), an actuation element (C_{act}) for setting in motion the mass in one direction based on an actuation signal (drive), supplied by a drive circuit (3), and a detection element (C_{det}) for detecting motion of the mass to adapt at least one level of oscillation amplitude of the moving mass in a control loop of the drive circuit (3), the electronic circuit (1) including an integration unit (5) clocked by a clocking signal (S_{CLK}) originating from the control loop of the drive circuit (3), the clocking signal being phase shifted by π/2 relative to a detection signal of the detection element (C_{det}) in phase with the carrier signal to allow the integration unit to demodulate the angular speed signal from the measurement signal,
**characterized in that** the electronic circuit (1) includes a measurement element (4), which includes at least two resistors (R1, R2) mounted in the form of a resistive bridge, the node connecting the two resistors being connected to an earth terminal and mechanically connected to the moving mass, **in that** the two resistors (R1, R2) are polarized by a current source unit (7), a first current source (11) being connected to a first end of the first resistor (R1) and a second current source (12) being connected to a second end of the second resistor (R2), the variation in resistive value of the first resistor (R1) being inverse to the variation in resistive value of the second resistor (R2) and varying at a frequency identical to the oscillation frequency of the moving mass, **in that** a first measurement signal (Sₘ₁) is supplied to the first end of the first resistor (R1), and **in that** a second measurement signal (Sₘ₂) is supplied to the second end of the second resistor (R2), the measurement signals (Sₘ₁; Sₘ₂) being received by the integration unit (5) and formed of a combination of a carrier signal in phase with the oscillation of the moving mass and of an angular speed signal phase shifted by π/2, and
**in that** the first end of the first resistor (R1) is connected to a first switch (21) at the input of the integration unit (5), **in that** the second end of the second resistor (R2) is connected to a second switch (24) at the input of the integration unit (5), **in that** the first and second switches (21, 24) are controlled by a first control signal (S1) dependent on the clocking signal (S_{CLK}), the first and second switches being in a closed state in an integration phase in a first state of the clocking signal (S_{CLK}), and in an open state in a second state of the clocking signal (S_{CLK}).

3. Electronic circuit (1) according to any of claims 1 and 2, wherein the detection element is a detection capacitor (C_{det}), **characterized in that** the drive circuit (3) includes a current-voltage converter (33), which outputs a mathematical derivative signal (der) of the motion of the mass based on a detection current (I_{det}) of the detection capacitor, and **in that** the clocking signal (S_{CLK}) is obtained at the output of at least one comparator (71), which compares the derivative signal (der) to a reference voltage (Vref).

4. Electronic circuit (1) according to claim 3, **characterized in that** the current-voltage converter (33) includes an amplifier (43), a negative input of which is connected to a fixed electrode of the detection capacitor (C_{det}) and a positive input of which receives the reference voltage (Vref), a resistor (R) being placed between the negative input and an output of the amplifier (43), which supplies the derivative signal (der) in sinusoidal form referenced in relation to the reference voltage (Vref) with a positive alternation above the reference voltage and a negative alternation below the reference voltage.

5. Electronic circuit (1) according to claim 1, **characterized in that** a first free end of the first resistor (R1) and a second free end of the second resistor (R2) are inversely connected to a high potential terminal (Vp) and to a low potential terminal (Vn) of the voltage source via a set of two switches (12, 14), which are controlled by a first control signal (S1) which depends on the clocking signal (S_{CLK}), said first and second switches being in a closed state in an integration phase in a first state of the clocking signal (S_{CLK}), and in an open state in a second state of the clocking signal (S_{CLK}).

6. Electronic circuit (1) according to claim 1, **characterized in that** a first free end of the first resistor (R1) and a second free end of the second resistor (R2) are inversely and alternately connected to a high potential terminal (Vp) of the voltage source and to a low potential terminal (Vn) of the voltage source via a set of switches (11, 12, 13, 14), which are controlled by control signals (S0, S1) dependent on the clocking signal (S_{CLK}).

7. Electronic circuit (1) according to claim 6, **characterized in that** the set of switches includes a first switch (11) connecting the first end of the first resistor (R1) to the low potential (Vn) of the voltage source, a second switch (12) connecting the first end of the first resistor (R1) to the high potential (Vp) of the voltage source, a third switch (13) connecting the second end of the second resistor (R2) to the high potential (Vp) of the voltage source and a fourth switch (14) connecting the second end of the second resistor (R2) to the low potential (Vn) of the voltage source, **in that** the second and fourth switches (12, 14) are controlled by a first control signal (S1) to be closed in a first integration phase during a first state of the clocking signal (S_{CLK}) with the first and third switches (11, 13) open, and **in that** the first and third switches (11, 13) are controlled by a second control signal (S0) to be closed in a second integration phase during a second state of the clocking signal (S_{CLK}) with the second and fourth switches (12, 14) open.

8. Electronic circuit (1) according to claim 1, **characterized in that** the integration unit (5) includes an amplifier (17), whose first input receives the measurement signal (Sₘ) and whose second input receives a reference voltage (Vref), an integration capacitor (C_{f}) being disposed between the first input and an output of the amplifier (17) to supply an integration signal (S_{I}) in an integration phase in a first state of the clocking signal (S_{CLK}).

9. Electronic circuit (1) according to claim 8, **characterized in that** the first input of the amplifier (17) is a negative input, **in that** the second input of the amplifier (17) is a positive input, and **in that** a discharge switch (15) is connected in parallel to the integration capacitor (Cf) to be controlled by a discharge control signal (Rst) before or after at least one integration phase.

10. Electronic circuit (1) according to claim 9, **characterized in that** the electronic circuit (1) includes an analogue-digital converter (6) for sampling the integration signal (S_{I}) and for supplying a digital data signal (S_{D}), and **in that** a sampling switch (16) of the integration unit (5) is disposed between the amplifier (17) output and the converter (6) input, the sampling switch being controlled by a sampling control signal (Samp) to supply the integration signal to the converter immediately after at least one integration phase and before a discharge control (Rst) from the integration capacitor (Cf).

11. Electronic circuit (1) according to claim 2, **characterized in that** the first end of the first resistor (R1) is connected to a first switch (21) and to a second switch (22) at the input of the integration unit (5), **in that** the second end of the second resistor (R2) is connected to a third switch (23) and to a fourth switch (24) at the input of the integration unit (5), **in that** the first and fourth switches (21, 24) are controlled by a first control signal (S1) dependent on the clocking signal (S_{CLK}), **in that** the second and third switches (22, 23) are controlled by a second control signal (S0) dependent on the clocking signal (S_{CLK}), **in that** the first and fourth switches (21, 24) are closed by the first control signal (S1) in a first integration phase, whereas the second and third switches (22, 23) are open, and **in that** the second and third switches (22, 23) are closed by the second control signal (S0) in a second successive integration phase, whereas the first and fourth switches (21, 24) are open.

12. Electronic circuit (1) according to claim 2, **characterized in that** the integration unit (5) includes a differential amplifier (27), whose first input receives at least the first measurement signal (Sₘ₁) in an integration phase and whose second input receives at least the second measurement signal (Sₘ₂) in the integration phase, **in that** a first integration capacitor (C_{f1}) is disposed between the first input and a first output of the differential amplifier (27) to supply a first integration signal (Sn) in the integration phase in a first state of the clocking signal (S_{CLK}), and **in that** a second integration capacitor (C_{f2}) is disposed between the second input and a second output of the differential amplifier (27) to supply a second integration signal (Sₗ₂).

13. Electronic circuit (1) according to claim 12, **characterized in that** the first input of the differential amplifier (27) is a positive input, **in that** the second input of the amplifier (27) is a negative input, **in that** a first discharge switch (25) is connected in parallel to the first integration capacitor (C_{f1}) to be controlled by a discharge control signal (Rst) before or after at least one integration phase, and **in that** a second discharge switch (26) is connected in parallel to the second integration capacitor (C_{f2}) to be controlled by the discharge control signal (Rst) before or after at least one integration phase.

14. Electronic circuit (1) according to claim 13, **characterized in that** the electronic circuit (1) includes an analogue-digital converter (6) for sampling the first integration signal (Sₗ₁) and the second integration signal (Sₗ₂) and for supplying a digital data signal (S_{D}), and **in that** a first sampling switch (28) of the integration unit (5) is disposed between the first output of the differential amplifier (27) and a first input of the analogue-digital converter (6), **in that** a second sampling switch (29) of the integration unit (5) is disposed between the second output of the differential amplifier (27) and a second input of the analogue-digital converter (6), and **in that** the first and second sampling switches (28, 29) are controlled by a sampling control signal (Samp) to supply the first and second integration signals to the converter immediately after at least one integration phase and before a control signal (Rst) for discharging the integration capacitors (C_{f1}, C_{f2}).

15. Method for actuating the electronic circuit (1) for measuring rotational speed in a gyroscope with a MEMS resonator according to any of claims 1 and 2, **characterized in that** the method includes the steps of:
- supplying at least one measurement signal (Sₘ) via at least two resistors (R1, R2) mounted in the form of a resistive bridge and polarized by at least one voltage source (Vp, Vn) or a current source unit (7), the node connecting the two resistors being mechanically connected to the moving mass, the variation in resistive value of the first resistor (R1) being inverse to the variation in resistive value of the second resistor (R2), and dependent on the oscillation of the resonator mass to an integration unit (5) in an integration phase dependent on the clocking signal (S_{CLK}), and
- supplying an integration signal (Sₗ) relating to the angular speed signal demodulated from the measurement signal at the integration unit (5) output for the duration of a half-period of a first state of the clocking signal (SCLK).

16. Method for actuating the electronic circuit (1) according to claim 15, **characterized in that** the measurement signal (Sₘ) is supplied to the integration unit during a first integration phase in a first state of the clocking signal (S_{CLK}), **in that** an inverse measurement signal (Sₘ) is supplied to the integration unit (5) during a second integration phase in a second state of the clocking signal (S_{CLK}).

17. Method for actuating the electronic circuit (1) according to claim 15, **characterized in that**, at the end of the integration phase, the integration signal (Sₗ) is supplied to an analogue-digital converter (6), and **in that** after the integration signal is supplied to the converter, the integration capacitor (C_{f}) is discharged before another integration phase while being clocked by the clocking signal (S_{CLK}).

18. Method for actuating the electronic circuit (1) according to claim 15, wherein the electronic circuit (1) includes at least two resistors (R1, R2) mounted in the form of a resistive bridge, whose node connecting the resistors (R1, R2) is connected to an earth terminal, and wherein a first current source (11) is connected to a first end of the first resistor (R1) for supplying a first measurement signal (Sₘ₁) to the integration unit (5) and a second current source (12) is connected to a second end of the second resistor (R2) for supplying a second measurement signal (Sₘ₂) to the integration unit (5), **characterized in that** the first and second integration signals (Sₗ₁, Sₗ₂) are outputted by the integration unit based on the first and second measurement signals and during an integration phase in a first state of the clocking signal (S_{CLK}).

19. Method for actuating the electronic circuit (1) according to claim 18, **characterized in that**, at the end of the integration phase, the first and second integration signals (Sₗ₁, Sₗ₂) are supplied to an analogue-digital converter (6), and **in that**, after the first and second integration signals are supplied to the converter, the integration capacitors (C_{f1}, C_{f2}) are discharged before another integration phase while being clocked by the clocking signal (S_{CLK}).

20. Method for actuating the electronic circuit (1) according to claim 18, **characterized in that** the first measurement signal (Sₘ₁) is supplied to a first input of a differential amplifier (27) of the integration unit (5) in a first integration phase, **in that** the second measurement signal (Sₘ₂) is supplied to a second input of the differential amplifier (27) in the first integration phase, **in that** the first measurement signal (Sₘ₁) is supplied to the second input of the differential amplifier (27) in a successive second integration phase, **in that** the second measurement signal (Sₘ₂) is supplied to the first input of the differential amplifier (27) in the successive second integration phase, and **in that** the first and second integration signals (Sₗ₁, Sₗ₂) are outputted by the integration unit at the end of one complete period of the clocking signal (S_{CLK}).
